# EUROPEAN PATENT APPLICATION

(11) **EP 4 576 459 A1**
(43) Date of publication of application: **25.06.2025**
(21) Application number: 23218923.3
(22) Date of filing: 20.12.2023
(51) Int. Cl.: H02B 1/056, H02B 1/06, H02B 1/14, H02B 1/21, H02B 1/42, H02B 1/48

(54) **TOUCH-PROTECTED BUSBAR SYSTEM WITH DOUBLE HOUSING**

(71) Applicant: Wöhner Besitz GmbH, 96472 Rödental (DE)
(72) Inventor: STEINBERGER, Philipp, 96450 Coburg (DE); MASEL, Joram, 96328 Küps (DE); MEISENBACH, Lars, 96450 Coburg (DE); BÜTTNER, Tobias, 96486 Lautertal (DE)
(74) Representative: Bratovic, Nino Maria

(57) **Abstract**

The invention provides a touch-protected busbar system (100; 500, 600; 700), comprising:
a set of busbars (110-i; 210-i) formed of massive busbars (110-i) or hybrid busbars (210-i);
an inner housing (120; 220; 320; 420; 520; 620) enclosing the set of busbars (110-i; 210-i) and having touch-protected openings (124; 225-i) of at least one type, the touch-protected openings (124; 225-i) allowing electrical and/or mechanical contacts (2, 3-i) of electrical devices (1) to pass through to contact the busbars (110-i; 210-i) of the set of busbars and to be mounted thereon; and
an outer housing (150; 350; 550; 650; 750; 850) comprising at least wall structures (151-154) and a top structure (156) forming a removable and/or openable lid, the outer housing (150; 350; 550; 650; 750; 850) enclosing the inner housing (120; 220; 320; 420; 520; 620; 820);
wherein the inner housing (120; 220; 320; 420; 520; 620; 820) is mountable or mounted to the outer housing (150; 350; 550; 650; 750; 850) or is partially integrated into the outer housing (150; 350; 550; 650; 750; 850).

## Description

### Technical field of the invention

The invention provides a touch-protected busbar system, in particular one with multiple housings for increased protection.

### Background of the invention

Busbar systems provide a simple and versatile way to power a large number of switching devices, and to monitor them easily. Since considerable power can be fed into the busbar system, user protection is a highly important basic condition for busbar systems. Touch-protected busbar systems employ measures that prevent a user from directly touching a (potentially) power-carrying busbar.

Moreover, also the switching devices and the busbar systems themselves need to be protected, be it against accidental interaction or simply against the elements, in particular for outdoor applications.

In recent years, considerable advances in the field of busbar systems have been made. One such advance is the introduction of so-called hybrid busbars: busbars which have a cross-section with distinctly different portions, wherein at least one first portion is configured to enable at least a first type of electrical device to be mechanically mounted to, and/or electrically contact, the busbar, and wherein at least one second portion is configured to enable at least a second type of electrical devices to be mechanically mounted to, and/or electrically contact, the busbar. More particularly, the first type of electrical devices has protruding electrical contacts configured to be inserted into slits in the first portion of the hybrid busbar, and the second type of electrical devices has electrical contact elements which contact the second portion of the hybrid busbar from the front and/or the rear.

In this sense, a hybrid busbar combines advantages from two other types of busbars: massive busbars and slitted busbars. Slitted busbars are configured to receive and engage with, mechanically and electrically, electrical devices of the first type, having protruding electrical contacts configured to be inserted into slits of the slitted busbars. Massive busbars are configured to be engaged by (at least) hook-shaped device mounting latches of devices of the second type, at a rear side of the busbar, typically while a contact element of the devices of the second type engages the massive busbar from the front as well.

EP 3 766 146 B1 describes a monolithic hybrid busbar having an integrated current-carrying rail profile portion and an integrated contact-receiving rail profile with contact openings. The contact openings, here formed as parallel slits, are equally spaced and configured to receive corresponding protruding electrical contacts of electrical devices of a first type to be connected to the touch protected busbar system. The hybrid busbar can be formed asymmetrically, with the contact openings being located in a lower half of the hybrid busbar, while the integrated adjacent current-carrying rail profile is located in an upper half of the hybrid busbar. The hybrid busbar comprises at least one bounding geometry having a rectangular cross section engageable by hook-shaped device mounting latches of a second type of electrical devices or electrical connectors or electrical adapters to be connected to the touch protected busbar system, wherein the device mounting latches can be passed through latch openings of the touch protection elements to engage the hybrid busbar from behind.

### Summary of the invention

It is one of the objectives of the present invention to provide a touch-protected busbar system that is securely protected against a wide range of possible external influences.

This objective is solved by the subject-matter of the independent claims.

Thus, according to an aspect of the present invention, a touch-protected busbar system is provided, comprising:
a set of busbars formed of massive busbars or hybrid busbars;
an inner housing enclosing the set of busbars and having touch-protected openings of at least one type, the touch-protected openings allowing electrical and/or mechanical contacts of electrical devices to pass through to contact the busbars of the set of busbars and to be mounted thereon; and
an outer housing, comprising at least wall structures and a top structure forming a removable and/or openable lid, the outer housing enclosing the inner housing;
wherein the inner housing is mountable or mounted to the outer housing or is partially integrated into the outer housing.

The busbars may be configured to carry a current, for example 320 Ampere of direct current, DC, or alternating current, AC, or more. The set of busbars may comprise any number of busbars, for example 1, 2, 3, 4, 5, or even more busbars. The busbars may all have the same purpose or different ones. For example, at least one busbar may be configured to carry a current for providing power to electrical devices to be mounted to the busbar system, at least one busbar may be provided for grounding said electrical devices, at least one busbar may be provided for transmitting communication signals, and so on. One busbar may be intended for protective earth (PE) a number of busbars may be intended for hot phases (L1, L2, L3), one busbar may be intended for a neutral wire (N), one busbar may be intended for communications and/or 24/48V DC voltage supply, and the like.

In some advantageous embodiments, refinements, or variants of embodiments, the outer housing is ingress-protected according to an ingress protection, IP, code of at least IP41, or according to a National Electrical Manufacturers Association, NEMA, rating of at least 2. In this way, the entire touch-protected busbar system can be placed in a large variety of different environments.

Preferably, the outer housing has a higher degree of ingress protection than the inner housing. In this way, the inner housing can be configured with connectivity and ease of use for the mounting of electrical devices in mind, while a more securely protected space, also for any mounted electrical devices, is provided by the outer housing.

In some advantageous embodiments, refinements, or variants of embodiments, the wall structures are formed as at least two separate wall units, which are mountable to one another to form at least the wall structures. The system can thus be easily transported, and the outer housing may merely be assembled if necessary. In other words, in this variant the touch-protected busbar system may be set up with the inner housing enclosing the set of busbars, where a lower degree of protection suffices, and the outer housing may be assembled around it if and when it is deemed that additional protection is necessary. This may be, for example, when an especially sensitive electrical device is to be mounted on the inner housing and the set of busbars, or when it is decided that the busbar system should be transferred to a more exposed location, e.g. to the outdoors.

In some advantageous embodiments, refinements, or variants of embodiments, the outer housing further comprising a bottom structure, wherein also the bottom structure and the top structure are formed separately, and are mountable to at least one of the at least two separate wall units, respectively.

In some advantageous embodiments, refinements, or variants of embodiments, the inner housing has at least one sealing groove extending in parallel with a first wall unit of the wall units, and said first wall unit has a sealing projection configured to be inserted into the sealing groove.

In some advantageous embodiments, refinements, or variants of embodiments, the first wall unit has an outer latching projection and the inner housing has an inner latching projection adjacent to, and partially forming, the sealing groove. The inner latching projection and the outer latching projection are configured to latchingly engage one another for sealing an interface between the inner housing and the outer housing.

In particular, the inner latching projection may be sandwiched, or configured to be sandwiched, between the sealing projection and the outer latching projection of the first wall unit.

In some advantageous embodiments, refinements, or variants of embodiments, the inner housing is releasably mounted to the outer housing. In other advantageous embodiments, refinements, or variants of embodiments, the inner housing is non-releasably (i.e., not non-destructively) mounted to the outer housing.

In some other advantageous embodiments, refinements, or variants of embodiments, a portion (preferably a bottom portion) of the inner housing is integrated into a structure, preferably a bottom structure, of the outer housing. In other words, a portion of the inner housing and a structure of the outer housing may be formed as a monolithic, integrated elements. In particular, the bottom portion of the inner housing and the bottom structure of the outer housing may be formed as an integrated, monolithic element. The bottom portion of the inner housing may be configured to accommodate and/or support the set of busbars, and may, for example, comprise or consist of one or more busbar support elements.

In some advantageous embodiments, refinements, or variants of embodiments, the inner housing has a bottom-side interface, and the busbar system comprises a power feed-in module, configured to feed power, and/or receive power, via the bottom-side interface of the inner housing.

In some advantageous embodiments, refinements, or variants of embodiments, the outer housing comprises at least one (preferably integrated) electrical interface structure with outside contact terminals on the outside of the outer housing and inside contact terminals on the inside of the outer housing. The outside contact terminals may be configured to receive external power-carrying elements from the outside of the outer housing, and the inside contact terminals may be electrically connected to corresponding ones of the outside contact terminals and configured to receive internal power-carrying elements at the inside of the outer housing.

In some advantageous variants of this, each inside contact terminal may be configured to receive one of the busbars of the set of busbars, or, more precisely, a corresponding bottom-side connection portion of one of the busbars. In some refinements, the inside contact terminals may have a two-pronged, or lyre, shape, configured to grasp the bottom-side connection portion of one of the busbars in between.

In some advantageous embodiments, refinements, or variants of embodiments, the (preferably integrated) electrical interface structure is ingress-protected according to an ingress protection, IP, code of at least IP41 and/or a NEMA rating of at least 2, and preferably of at least IP66 or a NEMA rating of at least 3.

In some advantageous embodiments, refinements, or variants of embodiments, in at least one of the at least one (preferably integrated) electrical interface structure, the outside contact terminals and the inside contact terminals are electrically connected via a set of connection bars comprising at least one connection bar. Each connection bar may be arranged in perpendicular to each busbar of the set of busbars.

In some advantageous embodiments, refinements, or variants of embodiments, at least one of the at least one (preferably integrated) electrical interface structure is arranged in one of the wall structures of the outer housing, wherein the outside contact terminals open to the outside of said wall structure, and the inside contact terminals open to the insides of said wall structure, wherein preferably each outside contact terminal is electrically connected to exactly one inside contact terminal.

In some advantageous embodiments, refinements, or variants of embodiments, each inside contact terminal is provided with a movable rigid connector element for connecting said inside contact terminal electrically with a device mounted, through the inner housing, on the set of busbars.

In some advantageous embodiments, refinements, or variants of embodiments, the busbar system further comprises at least one electrical device mounted on at least one busbar of the set of busbars, wherein the at least one electrical device is also plugged directly into at least one of the inside contact terminals.

### BRIEF DESCRIPTION OF THE DRAWINGS

The invention will be explained in greater detail with reference to exemplary embodiments depicted in the drawings as appended.

The accompanying drawings are included to provide a further understanding of the present invention, are incorporated in, and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.

Designations like "upper", "lower", "side", "top", "bottom", "front", "rear" and so on are consistently used but do not indicate that the switching device has to be oriented in a certain manner. In fact, in many applications, the busbar system will be mounted such that the side designated as "front side" is oriented towards the ground, and the side designated as "bottom side" is oriented towards a wall, with the side designated as "top side" or "upper side" being accessible to a user.

In the figures:
- Fig. 1: shows a schematic perspective view of a touch-protected busbar system (without its lid) according to an embodiment of the present invention;
- Fig. 2A: shows a perspective view of a detail of the touch-protected busbar system of Fig. 1;
- Fig. 2B: shows a perspective view of a detail of the touch-protected busbar system of Fig. 1 and Fig. 2A;
- Fig. 3: shows a detail of the touch-protected busbar system of Fig. 1;
- Fig. 4A: shows a schematic perspective view of a detail of a touch-protected busbar system according to another embodiment of the present invention;
- Fig. 4B: shows a perspective view of a detail of the touch-protected busbar system of Fig. 4A;
- Fig. 5: shows a variant of for the touch-protected busbar system of any of Fig.s 1-4;
- Fig. 6: shows a detail of the touch-protected busbar system according to the variant of Fig. 5;
- Fig. 7: shows another variant of for the touch-protected busbar system of any of Fig.s 1-6;
- Fig. 8: shows a detail of the variant of Fig. 7;
- Fig. 9: shows another detail of the variant of Fig. 7;
- Fig. 10: shows an explosion view of a touch-protected busbar system according to another embodiment of the present invention;
- Fig. 11: shows a detailed perspective view of the touch-protected busbar system of Fig. 10;
- Fig. 12: shows another detailed perspective view of the touch-protected busbar system of Fig. 10;
- Fig. 13: shows a schematic cross-section through parts of the touch-protected busbar system of Fig. 10;
- Fig. 14: shows a touch-protected busbar system according to another embodiment of the present invention;
- Fig. 15: shows a detailed perspective view of the touch-protected busbar system of Fig. 14;
- Fig. 16: shows another detailed perspective view of the touch-protected busbar system of Fig. 14;
- Fig. 17: shows still another a detailed perspective view of the touch-protected busbar system of Fig. 14;
- Fig. 18: shows a touch-protected busbar system according to a further embodiment of the present invention.
- Fig. 19: shows a detailed perspective view of the touch-protected busbar system of Fig. 18;
- Fig. 20: shows another detailed perspective view of the touch-protected busbar system of Fig. 18;
- Fig. 21: shows still another a detailed perspective view of the touch-protected busbar system of Fig. 18.
- Fig. 22: shows a touch-protected busbar system according to a still further embodiment of the present invention;
- Fig. 23: shows a schematic perspective view of some details of the busbar system of Fig. 22; and
- Fig. 24: shows another schematic perspective view of some details of the busbar system of Fig. 22 and Fig. 23.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

### DETAILED DESCRIPTION OF THE DRAWINGS

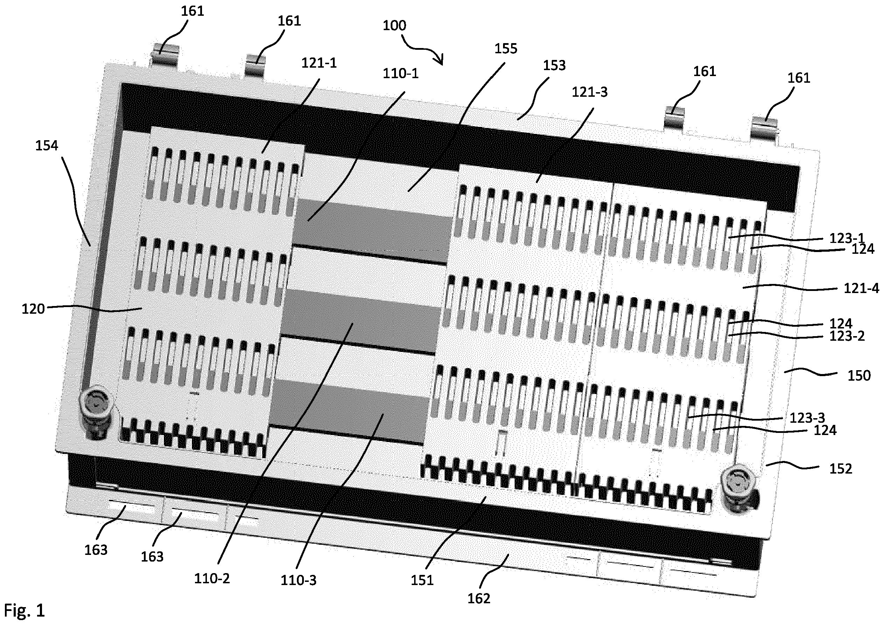

Fig. 1 shows a schematic perspective view of a touch-protected busbar system 100 according to an embodiment of the present invention, illustrating some of the basic features thereof.

The busbar system 100 comprises an outer housing 150 and an inner housing 120, which is in this example formed of four (although only three are shown) identical touch-protection cover elements 121-1, 121-2, 121-3, 121-4 (hereafter sometimes collectively referred to as 121-i). The second touch-protection cover element has been removed in Fig. 1 to show the busbars 110-1, 110-2, 110-3 (hereafter sometimes collectively referred to as 110-i) enclosed by the inner housing 120.

In Fig. 1, the busbars 110-i are massive busbars, although other kinds of busbars such as hybrid busbars may be used as well. Similarly, although a busbar system 100 with three busbars 110-i is shown, the busbar system 100 according to the present invention may be provided with any number of parallel busbars 110-i, for example 1, 2, 3, 4, 5 or even more parallel busbars 110-i.

The touch-protection cover elements 121-i are each provided with a number of parallel rows (equal to the number of busbars 110-i) 123-1, 123-2, 123-3 (hereafter sometimes collectively referred to as 123-i) of touch-protected latch openings 124. The latch openings 124 are formed as slits and are arranged in parallel to one another and perpendicular to the longitudinal extent of the busbars 110-i in the front side of the touch-protection cover elements 121-i. The rows 123-i are arranged in such a way, with respect to a respective busbar 110-i, that hook-shaped device mounting latches of devices (herein called devices of the second type, or of the second connection type) can enter the touch-protection cover elements 121-i adjacent to a respective busbar 110-i via the latch openings 124, and then be moved behind the busbars 110-i, hooking the electrical devices of the second connection type onto the busbars 110-i.

Additionally or alternatively, front-side connecting elements of electrical devices of the second connection type may engage with the latch openings 124 of the rows 123-i for mechanical stability and/or electrically interface with a front-side of the busbars 110-i through the latch openings 124. Therefore, preferably, the rows 123-i of latch openings 124 are arranged such that they overlap only partially with a front-side of the respective busbar 110-i, and partially allow access to a space besides the respective busbar 110-i, into which the device mounting latches can be inserted.

The top side of the inner housing 120 may be formed by a plurality of touch-protection cover elements 121-i, as shown in Fig. 1, or by a single, monolithic touch-protection cover element.

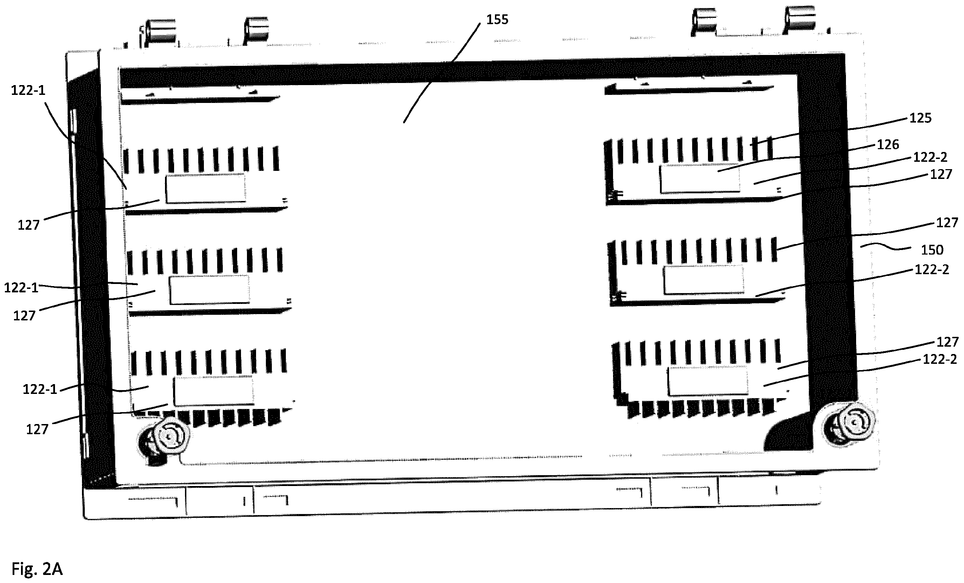

Fig. 2A shows a perspective view of the outer housing 150 and the inner housing 120 of the touch-protected busbar system 100 of Fig. 1 with the touch-protection cover elements 121-i and the busbars 110-i removed, so that a bottom portion of the inner housing 120 is visible. The bottom portion comprises, or consists of, a plurality of busbar support elements, here a first busbar support element 122-1 and a second busbar support element 122-2 (hereafter sometimes collectively referred to as 122-i), each of which has one busbar support member 125 for each of the busbars 110-i. Thus, six busbar support members 125 in total are comprised by the inner housing 120, as seen in Fig. 2A.

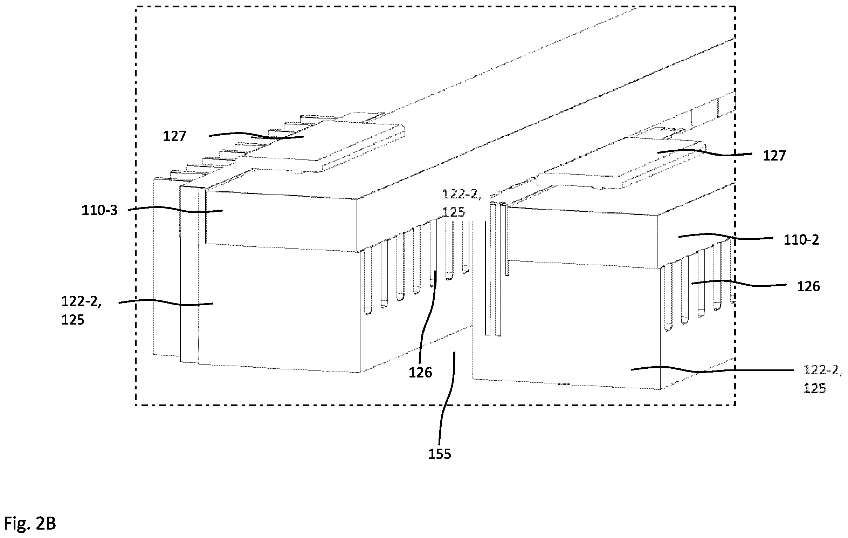

Each busbar support member 125 may comprise a slitted plateau portion 126 by which the busbar 110-i is supported, and may also comprise a holding structure 127 into which the busbar 110-i may be tucked or clipped for securing the busbar 110-i. The slits in each plateau portion 126 allow the hook-shaped device mounting latches of electrical devices of the second type to engage the massive busbars 110-i from the bottom side after having passed through the touch-protected latch openings 124 in the touch-protection cover elements 121-i. Providing slits (instead of an also possible empty space) within the plateau portion 126 contributes to fixing the hook-shaped device mounting latches in the longitudinal direction. The slits may also contribute to heat management as heat-radiating fins. The holding structure 127 can be seen as, in particular when the outer housing 150 is set up with Gravity pointing downwards in Fig. 2, a holding pouch for the busbar 110-i as well.

In the variant of Fig. 1 and Fig. 2, the bottom portion of the inner housing 120, including the busbar support elements 122-i, is formed integrally and monolithically with a bottom structure 155 of the outer housing 155. Thus, during assembly, a user may simply tuck the busbars 110-i into the holding structures 127 of the busbar support elements 122-i. Then, the touch-protection cover elements 121-i may be provided over (for example, latched onto) the bottom portion of the inner housing 120, i.e., the busbar support elements 122-i, thus forming the inner housing 120. The coupling between touch-protection cover elements 121-i and busbar support elements 122-i may be reversible or irreversible.

In other variants, the inner housing 120, and especially the busbar support elements 122-i, may also be formed separately from the outer housing 150, and then - reversibly or irreversibly - connected to the outer housing 150.

Fig. 2A also illustrates that the bottom structure 155 of the outer housing 150 preferably has no openings to the outside of the outer housing 150.

Fig. 2B shows a three-dimensional side view of a part of the second busbar support element 122-2, integrally formed with the bottom structure 155 of the outer housing 150, and of a respective longitudinal end portion of two of the massive busbars 110-2, 110-3. Fig. 2B illustrates in particular how the massive busbars 110-i may be tucked under the holding structures 127, here formed as plate-like protrusions of each busbar support member 125, the plates of the plate-like protrusions being arranged in parallel to a receiving surface for the busbar 110-i of the respective plateau portion 126, so that each busbar 110-i can be sandwiched between the respective plateau portion 126 and the respective holding structure 127 at each of its longitudinal ends.

Returning to Fig. 1, the outer housing 150 comprises at least walls structures 151, 152, 153, 154, surrounding and enclosing the inner housing 120 completely from four of the six spatial directions. The touch-protected busbar system 100 of Fig. 1 further comprises a bottom structure 155 of the outer housing 150 on the bottom side of the inner housing 120. In the shown example, the wall structures 151-154 and the bottom structure 155 are monolithically formed (i.e., integrated with one another) so as to surround and enclose the inner housing 120 completely from five of the six spatial directions.

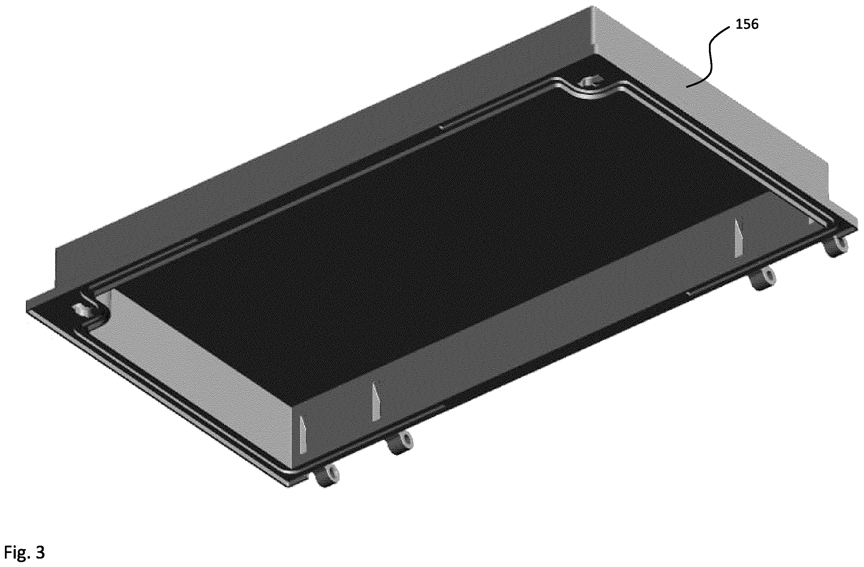

The outer housing 150 further comprises a top structure 156 (here shown in Fig. 3), which is pivotably connected, via hinges 161 shown in Fig. 1, to one of the wall structures 153. This top structure 156 thus acts as a lid element (or: cover), with which the outer housing 150 can be closed, so as to surround and enclose the inner housing 120 completely in all six spatial directions.

Although the top structure 156 is here implemented as a pivotable lid, it shall be understood that any other type of top structure closing the outer housing 150 may be provided as well. For example, the top structure 156 may be screwed to any or all of the wall structures 151-154, it may be slidable connected to any or all of the wall structures 151-154, it could be configured to be fastened magnetically to any or all of the wall structures 151-154, it may be latched onto any or all of the wall structures 151-154 and/or the like.

Fig. 3 thus shows the top structure 156, functioning as a pivotable lid, from below, i.e., from the inside of the outer housing 150. This top structure 156 may be provided for all of the embodiments described herein, although variants are of course possible.

Fig. 1 also illustrates that the outer housing 150 may be provided with a mounting structure for facilitating mounting of the outer housing 150, and thus the touch-protected busbar system 100, to an external structure such as a wall, or the (mounting) panel of an installation cabinet, a switching cabinet, or a control cabinet. In the shown example, the bottom structure 155 of the outer housing 150 is formed with mounting flanges 162 adjacent to two of the wall structures 151, 153, which comprise a number of mounting holes 163.

The top side of the inner housing 120 is, in this example, the side of the inner housing 120 that faces the top structure 156, at least when the outer housing 150 is closed, and the bottom side of the inner housing 120 is the side which faces the bottom structure 155 of the outer housing 150.

The interface between the structures 151-155 of the inner housing 150 and the top structure 156 is preferably configured such that, when the outer housing 150 is closed, it is ingress-protected according to an ingress protection, IP, code of at least IP41, or according to a National Electrical Manufacturers Association, NEMA, rating of at least 2. Specifically, the outer housing 150 may have a higher degree of ingress protection than the inner housing 120. The inner housing 120 has, owing to being touch-protected, an IP code of at least IP2x.

In some variants, the wall structures 151-154 and/or the bottom structure 155 may be formed of separate and/or separable parts. In this case, the interface between each two of them may also be configured such that the outer housing 150, when closed, has the above-specified degree of ingress protection or more, for example, IP65 or higher, or NEMA 2 or higher.

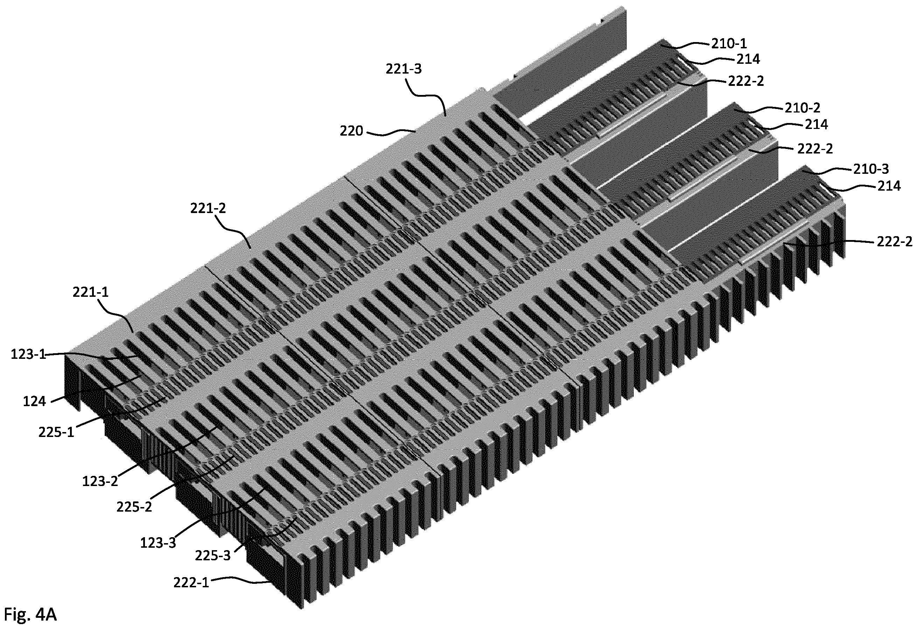

Fig. 4A shows a schematic perspective view of an inner housing 220 of a touch-protected busbar system 100 according to another embodiment of the present invention, which is a variant of the touch-protected busbar system 100 of Fig. 1.

In this variant, the set of busbars enclosed within the inner housing are not massive busbars 110-i, but hybrid busbars 210-1, 210-2, 210-3 (hereafter sometimes collectively referred to as 210-i). Each of the hybrid busbars 210-i has a slitted portion (or: contact-receiving rail profile) with a row of parallel contact openings 214, and an attached integrated adjacent massive portion (or: current-carrying rail profile). Each hybrid busbar may be formed as has been described, for example, in EP 3 766 146 B1, the contents of which are hereby incorporated by reference in their entirety. The hybrid busbars 210-i have a rectangular cross-section engageable by hook-shaped device mounting latches of electrical devices of the second connection type.

Accordingly, touch protection cover elements 221-1, 221-2, 221-3 ((hereafter sometimes collectively referred to as 221-i), here four of them, although only three are shown, of the inner housing 220 comprise essentially or exactly the same rows 123-i of latch openings 124 as the inner housing 120 of Fig. 1, Fig. 2A and Fig. 2B. The partial overlap of the latch openings 124 with the corresponding hybrid busbar 210-i occurs over the massive portion of the corresponding hybrid busbar 210-i.

In addition, the inner housing 220 comprises, for each hybrid busbar 210-i, an additional row of access openings 225-1, 225-2, 225-3 (hereafter sometimes collectively referred to as 225-i). The access openings 225-i are smaller than the latch openings 124 and therefore also touch-protected. They are formed as parallel slits, each exactly in line with a corresponding one of the contact openings 214 in the underlying enclosed hybrid busbar 210-i. Thus, electrical contacts of electrical devices of the first type (or: of the first connection type) can be inserted through the access openings 225-i into the contact openings 214, for the electrical and/or mechanical connection of the electrical devices of the first type to the hybrid busbars 210-i. The hybrid busbars 210-i are supported by busbar support elements 222-1, 222-2, 222-3 (hereafter sometimes collectively referred to as 222-i), which partially contribute to the bottom part of the inner housing 220, much as the busbar support elements 122-i to the bottom part of the inner housing 120.

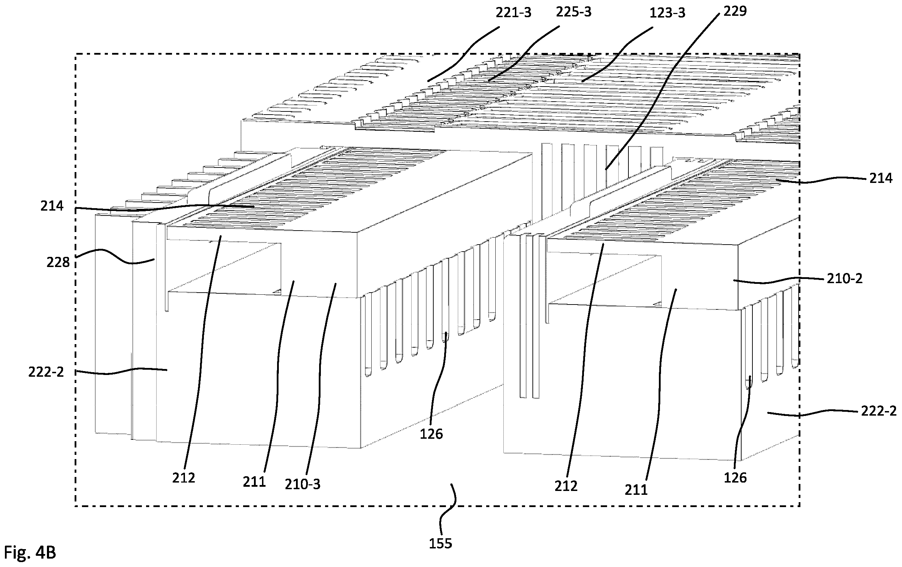

Fig. 4B shows a three-dimensional side view of a part of the second busbar support element 222-2, integrally formed with the bottom structure 155 of the outer housing 150, and of a respective longitudinal end portion of two of the hybrid busbars 210-2, 210-3. Comparing with Fig. 2B, it is visible that in this variant the busbar support elements 222-i do not comprise holding structures 127, as these would cover the contact openings 214 within the slitted portion 212 (or: contact-receiving rail profile) of the hybrid busbars 210-i. However, the cross-section of each hybrid busbar 210-i is fittingly supported by the respective slitted plateau portion 126, a side wall 228 of the respective busbar support element 222-i, and the touch-protection cover elements 221-i (only the third touch-protection cover element 221-3 is shown in Fig. 4B).

Additionally, the touch-protection cover elements 221-i may comprise two intermediate structures 229 configured to be inserted between the plateau portion 126 for one busbar 210-3 and the side wall 228 of an adjacent busbar 210-2. The intermediate structure 229 preferably comprise slits aligned with the slits in the slitted plateau portions 126. In this way, hook-shaped device mounting latches can grip the massive portion 211 of the hybrid busbars 210-i from the bottom side after having passed through the latch openings 123-i, the slits in the intermediate structure 229, and the slits in the slitted plateau portion 126.

In all of the variants described with respect to Fig. 1 through Fig. 4B, and also in the following, the busbar support elements 122-i, 222-i (and/or other parts of the inner housing 120, 220) may be formed integrally with a part of the outer housing 150, for example, with the bottom structure 155. In other variants, the busbar support elements 122-i, 222-i may be removably, or irreversibly, latched or mounted onto a part of the outer housing 150, in particular the bottom structure 155.

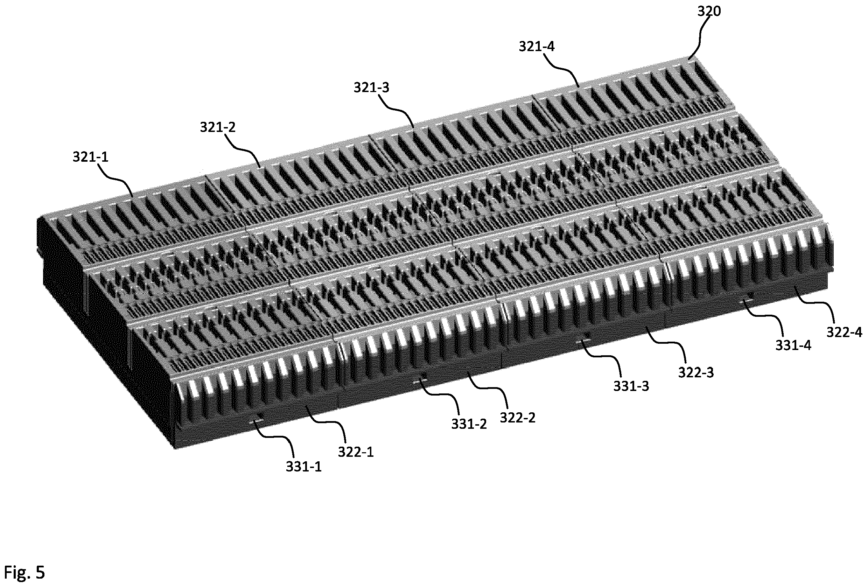

Fig. 5 shows yet another variant of an inner housing 320 for the touch-protected busbar system 100. In this variant, the inner housing 320 comprises four front-side touch-protection cover elements 321-1, 321-2, 321-3, 321-4 (hereafter sometimes collectively referred to as 321-i), each of which is on its bottom side connected to a bottom-side busbar support element 322-1, 322-2, 322-3, 322-4 (hereafter sometimes collectively referred to as 322-i). As has been said in the foregoing, all cover elements 321-i and/or all support elements 322-i, or all of them together, may be formed monolithically as well, or may be formed of individual structures as shown in Fig. 5. In other words, in this variant, the busbar support elements 322-i and the touch-protection cover elements 321-i are formed separately from one another and from the outer housing, and then later connected to one another.

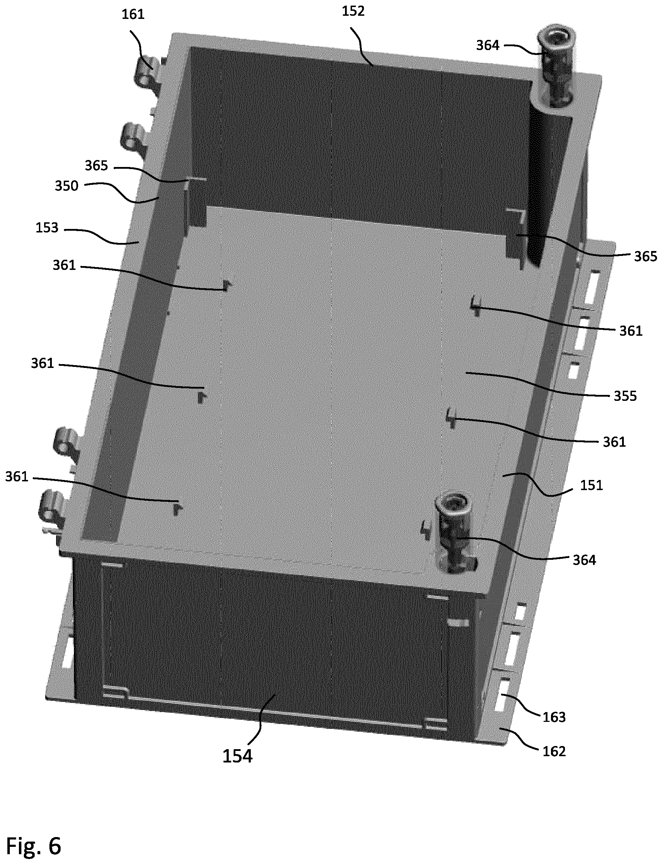

The inner housing 320 is provided with mounting recesses 331-1, 331-2, 331-3, 331-4 (hereafter sometimes collectively referred to as 331-i) for receiving corresponding mounting latches of the outer housing, for reversibly or irreversibly mounting the inner housing 320 to the outer housing. A corresponding outer housing 350 is shown in Fig. 6, with mounting latches 361 fixedly and integrally arranged on the bottom structure 355 of the outer housing 350.

In the example shown in Fig. 5 and Fig. 6, each of the four busbar support elements 322-i has one mounting recess 331-i on each side in a direction perpendicular to the longitudinal extent of the busbars 210-i. Thus, there are eight mounting recesses 331-i in total, corresponding to eight mounting latches 361-i in the housing 350, of which six are visible from the angle of view shown in Fig. 6. The mounting latches 361-i, preferably the entire outer housing 350, is made from an elastic material so that the mounting latches 361-i can be elastically deformed and bent away by pressing the inner housing 320 against the bottom structure 355, until they snap back into the corresponding and aligned mounting recesses 331-i.

It shall be understood that many alternatives are possible, for example, not every busbar support element 322-i may have a mounting recess 331-i, there may not be a mounting latch 361-i for every mounting recess 331-i, the mounting recesses may be formed in the touch-protection cover elements 321-i instead, the mounting latches 361-i may be formed in any of the wall structures 151-154 of the outer housing 350,and/or the like. Thus, in general, the inner housing 320 and the outer housing 350 may be connectable by any kind of mounting latches/mounting recesses combination. Alternatively or additionally, the inner housing 320 and the outer housing 350 could be mounted to one another using screws, or other kinds of latches, catches, or locks, such as latch clamps, bayonet catches, twist locks, or the like. The top structure 156 may be sealed to the remaining structure 151-155, e.g. sealed with leads, or locked with a lock-and-key mechanism.

In Fig. 6 also two out of (exemplary) four guiding structures 365 are shown, which are formed to guide the inner housing 320 towards its final position with respect to the outer housing 350, in particular such that the mounting recesses 331-i and the mounting latches 361-i align. Here, the guiding structures 365 are provided on the wall and bottom structures 151-155 of the outer housing 350 in the form of corner wall structures for guiding the four corners of the inner housing 320 towards the bottom structure 155.

Fig. 6 also illustrates how fasteners 364 may be provided for securely fastening the top structure 156 to the wall structures 151-154 for closing the outer housing 350. Alternatively or additionally, the inner housing 320 and the outer housing 350 could be mounted to one another using screws, or other kinds of latches, catches, or locks, such as latch clamps, bayonet catches, twist locks, or the like. The top structure 156 may be sealed to the remaining structure 151-155, e.g. sealed with leads, or locked with a lock-and-key mechanism.

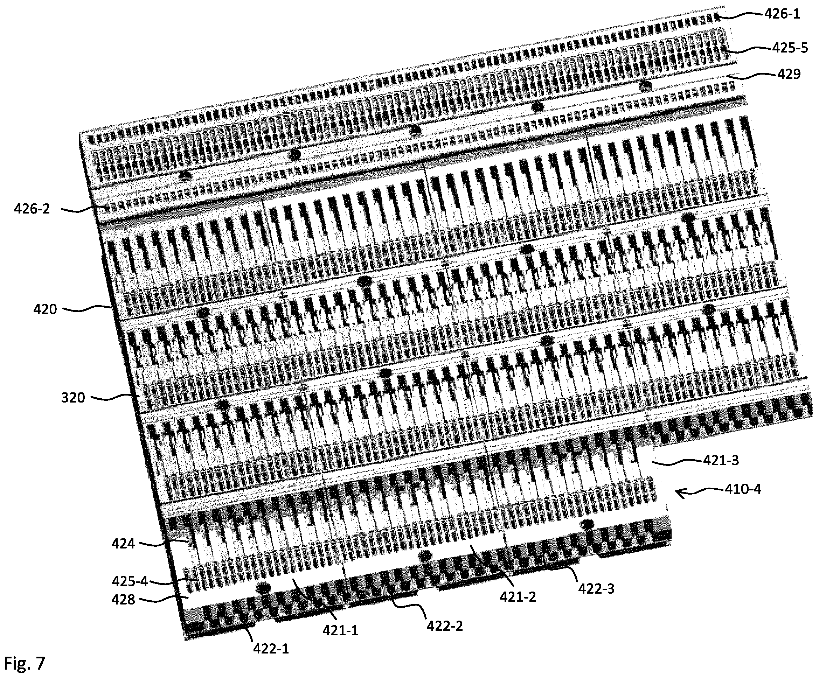

Fig. 7 shows another variant for an inner housing 420 to be used with the touch-protected busbar system 100, in place of any of the other inner housings 120, 220, 320 that are described herein, in the foregoing or hereafter. The inner housing 420 may be conceived of as the inner housing 320 of Fig. 5, to which, in parallel to the busbars 210-i, additional supplemental housings 428, 429 have been coupled (or: attached).

The supplemental housings 428, 429 themselves may be formed as comprising, or consisting of, touch-protection cover elements 421-1, 421-2, 421-3 (hereafter sometimes collectively referred to as 421-i) and busbar support elements 422-1, 422-2, 422-3 (hereafter sometimes collectively referred to as 422-i), as shown in Fig. 7 exemplarily for a first supplemental housing 428. The touch-protection cover elements 421-i of the supplemental housing 428 are here each formed with the same width as the touch-protection cover elements 321-i of the inner housing 320, and are aligned with them, and with a corresponding busbar support element 422-i as well. Since it encloses a fourth hybrid busbar 410-4, its touch-protection cover elements 421-i comprise latch openings 424 analogous to the latch openings 224 of the housing 320, and access openings 425-4 analogous to the access openings 225-i of the housing 220. While the first three busbars 210-1, 210-2, 210-3 may carry, for example, an electric current for one electrical phase L1, L2, L3 each, the fourth busbar 410-4 may, for example, provide a neutral phase N.

The design may be modular, so that, as shown in Fig. 7, any of the busbars 410-4 may be shorter than the other busbars 210-i, and therefore the corresponding supplemental housing 428 may be shorter than the main inner housing 320 as well, specifically by selecting fewer touch-protection cover elements 421-i and busbar support elements 422-i, respectively. Similarly, the busbars 410-4 of any supplemental housing 428, 429 may also be longer than the other busbars 210-i, and the corresponding supplemental housing 428, 429 may also be correspondingly larger. In any of the embodiments or variants described herein, the first and last element in longitudinal direction (i.e., along the set of busbars) of the cover elements 421-i, of the busbar support elements 422-i and the like, may be formed differently. For example, they may be formed such as to prevent axial movement of the busbars enclosed therein.

The second supplemental housing 429 in Fig. 7 has the same width as the main housing 320. In this example, the second supplemental housing 429 is only provided with access openings 425-5, the same - or similar - as the access openings 215-i, 425-4. On both sides of the access openings 425-5 and in parallel thereto, a respective row of fastener openings 426-1, 426-2 (hereafter sometimes collectively referred to as 426-i) are provided, such that one fastener opening 426-i of each row of fastener openings 426-i aligns with two of the access openings 425-5. The fastener openings 426-i may be used to receive mechanical fastening hooks of electrical devices to be mounted on the second supplemental housing 429. The two rows of fastener openings 426-i may be asymmetrically provided on both sides of the access openings 425-5 such that mounting an electrical device is only possible in one orientation, i.e., mounting in the wrong orientation is impossible.

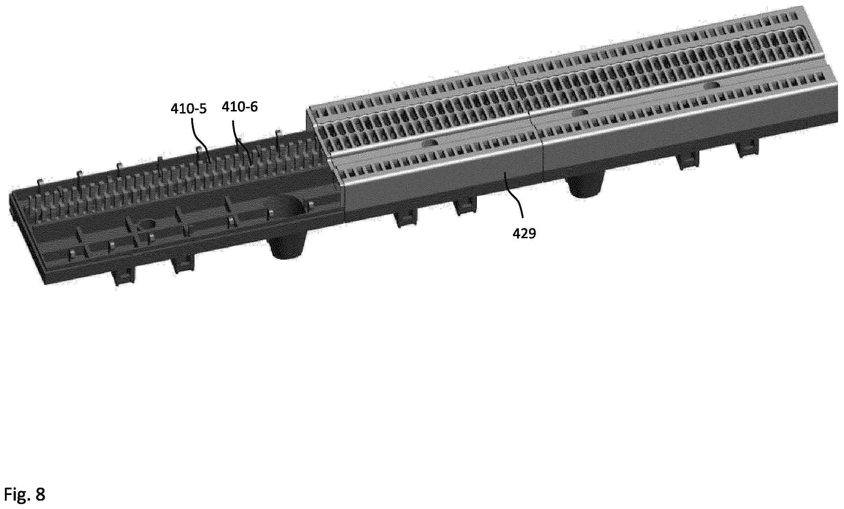

Fig. 8 shows an isolated perspective view of the second supplemental housing 429, with one of its touch-protection cover elements removed. As in the foregoing, the touch-protection cover elements of the second supplemental housing 429 may be integrally or monolithically formed with one another, the busbar support elements of the second supplemental housing 429 may be integrally or monolithically formed with one another, the entire second supplemental housing 429 may be monolithically formed itself, and may even be monolithically formed with one or more parts of the main inner housing 320. Similarly, the busbar support elements of the second supplemental housing 429 may be formed integrally or monolithically with the bottom structure 155 of the outer housing 350. The second supplemental housing 429 may have mounting recesses for receiving mounting latches 361-i of the outer housing 350, or it may have mounting recesses and/or mounting latches for being mounted (or: coupled), releasably or irreversibly, to the main inner housing 320.

Where one of the touch-protection cover elements is shown as removed in Fig. 8, two busbars 410-5, 410-6 are visible, which are insulated from one another. The busbars 410-5, 410-6 may, for example, be configured to carry a 24 V or a 48 V DC current, e.g., to provide auxiliary currents to electrical devices. A sum current carried by the busbars 410-5, 410-6 may amount to a value of between 5 A and 50 A. Moreover, a communication signal may be superimposed onto this current (PowerLAN or power line communication, PLC), so that the busbars 410-5, 410-6 may also be designated as communication busbars.

The busbars 410-5, 410-6 are supported by the busbar support elements of the second supplemental housing 429 and enclosed by the second supplemental housing 429.

The inner housing 420 thus encloses 6 busbars in the shown example: the same three hybrid busbars 210-1, 210-2, 210-3 as the housings 220, 320 did, and in addition another hybrid busbar 410-4 and two communication busbars 410-5, 410-6.

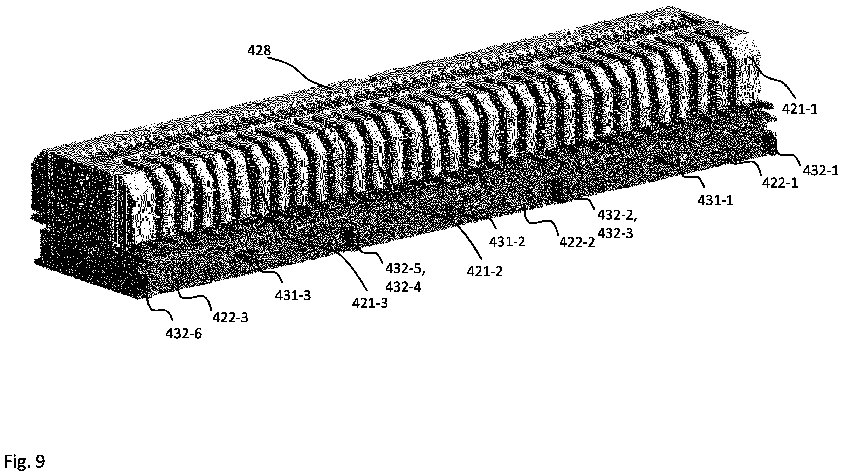

Fig. 9 shows an isolated perspective view of the first supplemental housing 428. On a surface configured to face the main inner housing 320, each of its busbar support elements 422-i has a mounting latch 431-1, 431-2, 431-3 for engaging with a corresponding mounting recess 331-i of the main inner housing 320. Each busbar support element 422-i may have at least one additional protrusion 432-1,...,432-6 (hereafter sometimes collectively referred to as 432-i), for which corresponding recesses may be formed in a matching surface of the main inner housing 320, or vice versa. In the shown example, each busbar support element 422-i has one such protrusion at each of its longitudinal ends protruding from the surface in which also the mounting latches 431-i are formed.

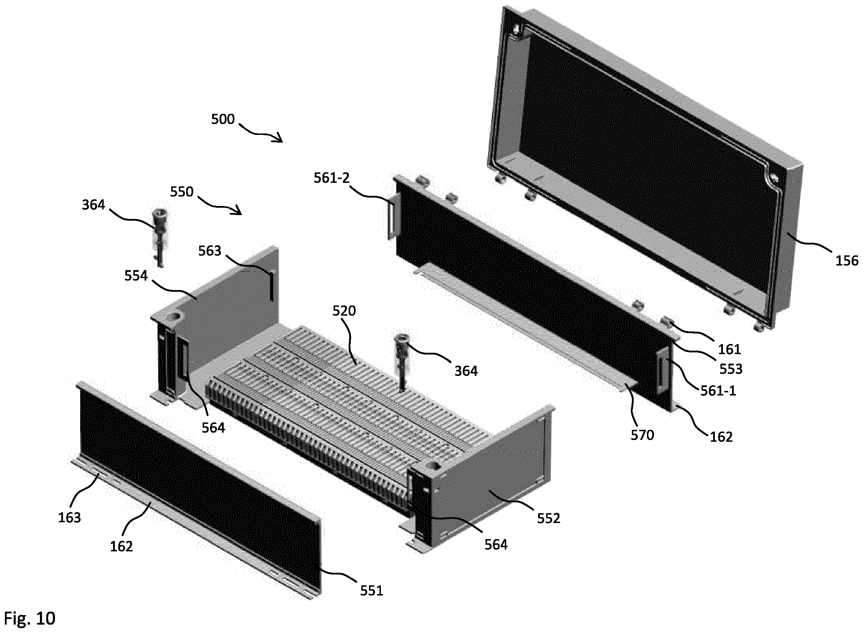

Fig. 10 shows an explosion view of a touch-protected busbar system 500 according to another embodiment of the present invention. In this variant, the outer housing 550 comprises a first wall unit 551 forming a front wall structure, a second wall unit 552 forming a first (right) side wall structure, a third wall unit 553 forming a rear wall structure, a fourth wall unit 554 forming a second (left) side wall structure, and the top structure 156 forming a lid, or cover, structure. The bottom structure of the outer housing 550 is formed by the bottom part of the inner housing 520. Thus, in this variant, the wall structures are not formed monolithically and integrated with one another, but as a plurality of separate portions which can be coupled to one another to form the outer housing 550.

For this coupling, the wall units 551-554 may be provided with some additional features, when compared to the wall structures 151-154 of other outer housings 150, 350 described herein. Although these structures will be described at times with one part on one wall unit and a counterpart on another wall unit as a specific example, it shall be understood that, equally, the part and the counterpart may be exchanged with respect to the wall units they are arranged on.

For an easier description, in the following, the arrangement and positions of features, elements, and structures, of the touch-protected busbar system 500 will be described with respect to the state in which they are assembled. Instead of adding "when assembled" in each case, it should be assumed that the descriptions refer to this state.

In the shown example, the third wall unit 553 (in other words: the rear wall), here the one with the hinges 161 for pivotably attaching the top structure 156, is provided with two slitted side flanges 561-1, 561-2, protruding from an inward-facing (i.e., towards the inner housing 520) surface at both its longitudinal ends, towards the first wall unit 551, perpendicular to the main plane of the third wall unit 553. Also on the inner surface of the third wall unit 553, a sealing structure 570 is formed, which protrudes towards the inner housing 520 and which will be described in more detail in the following. A similar, or identical, sealing structure is formed on the inner surface of the first wall unit 551, although not visible in Fig. 10.

The slitted side flanges 561-1, 561-2, together with protrusions 563 at the inward-facing surfaces of the second and third wall units 552, 554 configured to be received by the slits in the slitted side flanges 561-1, 561-2, form connecting means for connecting the side walls to the rear wall. Similarly, in each case perpendicular to its main plane, each side wall has a slitted side flange 564, forming a corresponding connecting means with corresponding protrusions in the front wall (first wall unit 551). Each of the protrusions in any of the wall units 551-554 may have an undercutting hook at its end. It shall be understood that this is only one particular way of forming connecting means between separate wall units 551-554 and/or the top structure 156 and/or the bottom structure 155.

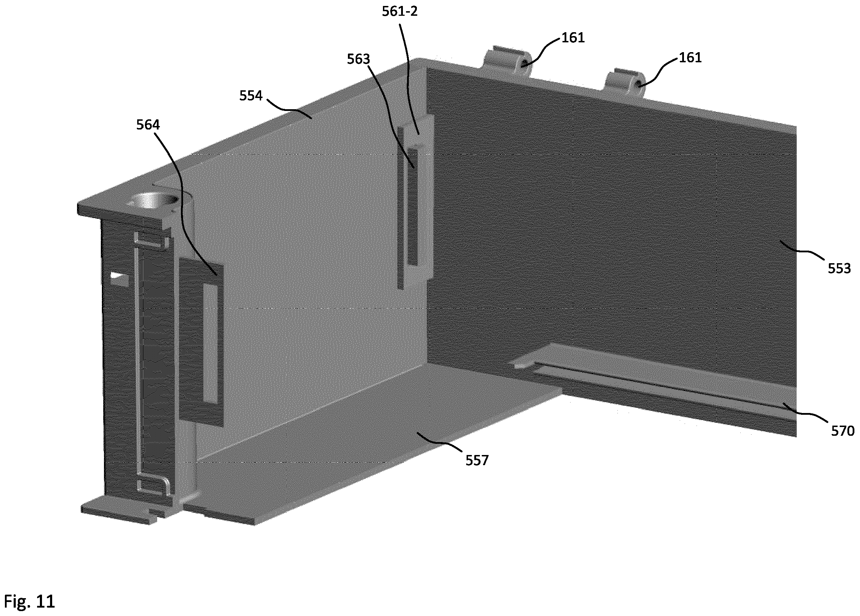

Fig. 11 shows a detailed perspective view of the rear wall (third wall unit 553) and the left side wall (fourth wall unit 554) assembled via the described connecting means, here with the undercutting hook of the protrusion 563 reaching around the slitted side flange 561-2. The same method of sealing off one corner of the outer housing 550 can be employed for the other corners as well.

Fig. 11 also shows how a part of the bottom structure of the outer housing 550 is provided by a planar protrusion 557 flush with the bottom-side edge of the wall units 551-554. In the shown example, both the second and the fourth wall units, 552, 554, are provided with such a planar protrusion 557, the two extending towards one another. In between, an opening is left into which the inner housing 520 is settable. Thus, the bottom side of the inner housing 520 forms another part of the bottom structure of the outer housing 550. The inner housing 520 may be configured such that its bottom side (i.e., outer surface) is flush with the planar protrusions 557 and the edges of the wall units 551-554.

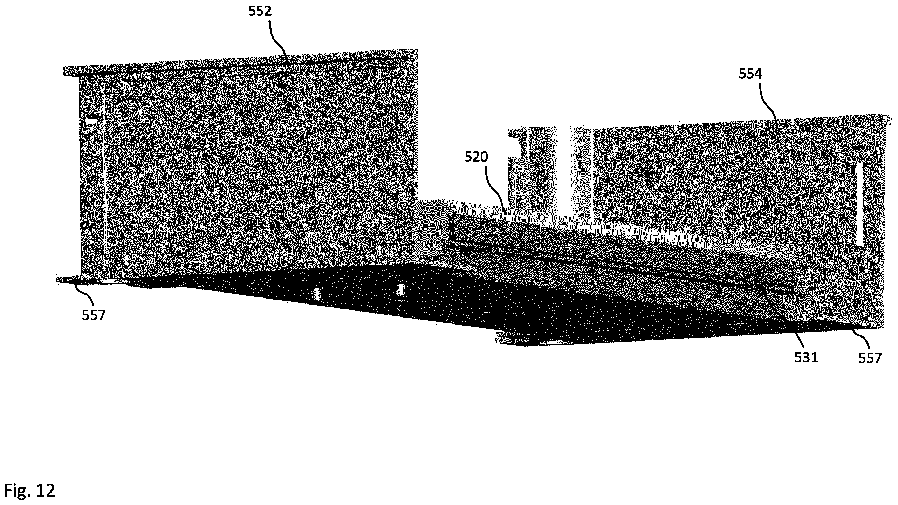

Fig. 12 shows a schematic perspective view of the inner housing 520 arranged with respect to the side walls, i.e., the second side wall unit 552 and the fourth side wall unit 554.

Fig. 12 also shows that the inner housing 520 may be provided with two sealing grooves 531 extending in parallel to the front and rear wall unit (i.e., the first and third wall units 551, 553), one facing the first wall unit 551, and one facing the rear wall unit 553. These sealing grooves 531 are provided to latchingly engage with the sealing structures 570 in the first and third wall units 551, 553, respectively.

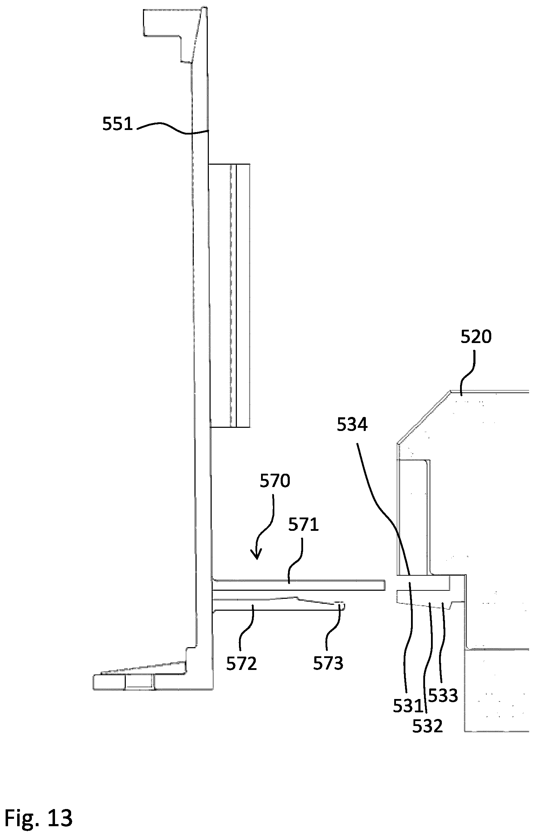

Fig. 13 shows a schematic cross-section through the first wall unit 551 (or the third wall unit 551 which may be formed analogously in this regard) and a part of the inner housing 520 for illustrating their latching interaction.

As Fig. 13 shows, the sealing structure 570 here has two parts: a sealing projection 571, and an outer latching projection 572. Conversely, the inner housing 520 has the sealing groove 531 and an inner latching projection 532. The sealing projection 571 is configured to be received within the sealing groove 531, which is formed on one side (top side) by an overhanging ledge 534 of the inner housing 520, and on the other (bottom side) by the inner latching projection 532.

Both the sealing projection 571 and the outer latching projection 572 are formed as essential planar, parallel structures, as is also visible in Fig. 11. The latching projection 572 is formed with a latching hook 573 at its tip in its cross-section, as is shown in Fig. 13.

The inner latching projection 532 has, on its outer (with respect to the sealing grove 531) side, i.e. its bottom side, a latching hook 533 in its cross section. This latching hook 533 is configured to engage with its counterpart, the latching hook 573 of the sealing structure 570. For sealing the interface between the outer housing 550 and the inner housing 520, at least locally, the inner latching projection 532 is sandwiched between the sealing projection 571 and the outer latching projection 572, the sealing projection 571 is accommodated in the sealing groove 531, and the latching hooks 533, 573 latchingly engage one another.

However, it shall be understood that in the modular design of the touch-protected busbar system 500, many variants are possible. For example, there may be an additional separately provided bottom unit configured to form the bottom part together with the wall units 551-554, adjacent to, or even at a distance from, the bottom side of the inner housing 520. Said bottom unit may be configured to sealingly engage with the wall units 551-554 as has been described in the foregoing with respect to the inner housing 520, i.e., with the sealing structure 570 and a corresponding sealing groove 531 formed in the bottom unit and/or the like.

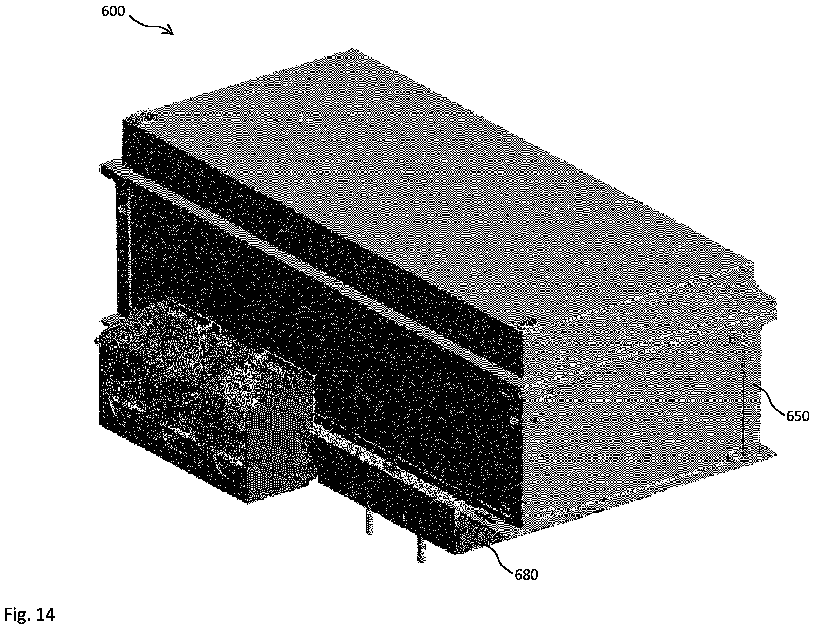

Fig. 14 shows a touch-protected busbar system 600 according to another embodiment of the present invention. In this embodiment, the outer housing 650 is configured for a bottom-side power connection, i.e., bottom-side power feed-in or bottom-side power feed-out. As the more typical application, in the following the case of bottom-side power feed-in will be described in more detail. However, it shall be understood that the described electrical power flow can analogously be provided in the reverse direction. The busbar system 600 comprises a power feed module 680, which will in this example be used for power feed-in, i.e., as a power feed-in module.

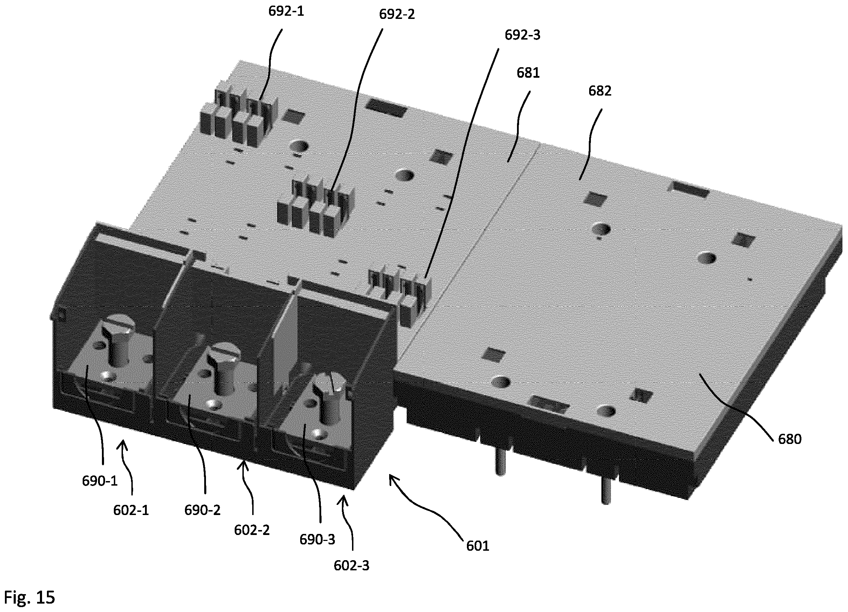

Fig. 15 shows the touch-protected busbar system 600 with the outer housing 650 and the inner housing both removed, allowing a better view of the power feed module 680. In this present example, the power feed module 680 is formed modularly, here being formed by two pieces, each in itself being constructed modularly. One piece, here shown to the left, is the proper power feed part 681, the other piece, here shown to the right, is a mechanical part 682, mostly provided for additional stability. However, as with all other elements and housings described herein, both a modular design as well as a monolithic design are possible. The power feed part 681 and the mechanical part 682 of the power feed module 680 may, for example, be mounted on (e.g., screwed to) a wall or a mounting plate of a control cabinet. The outer housing 650, preferably already including the inner housing, of the touch-protected busbar system may then be mounted to the power feed module 680 and fixed thereon, e.g., screwed on.

Fig. 15 also illustrates that the busbar system 600 further comprises a set of connection bars 690-1, 690-2, 690-3 (hereafter sometimes collectively referred to as 690-i), which are preferably formed as massive bars. External power-carrying elements, for example cables, may be connected to these at an electrical interface structure 601 of the busbar system 600. The electrical interface structure 601 comprises one outside contact terminal 602-1, 602-2, 602-3 (hereafter sometimes collectively referred to as 602-i) for each of the connection bars 690-i of the set of connection bars. In Fig. 14, it is shown how the outside contact terminals 602-i may be partially covered by movable, in particular pivotable, covers, which are not shown in Fig. 15.

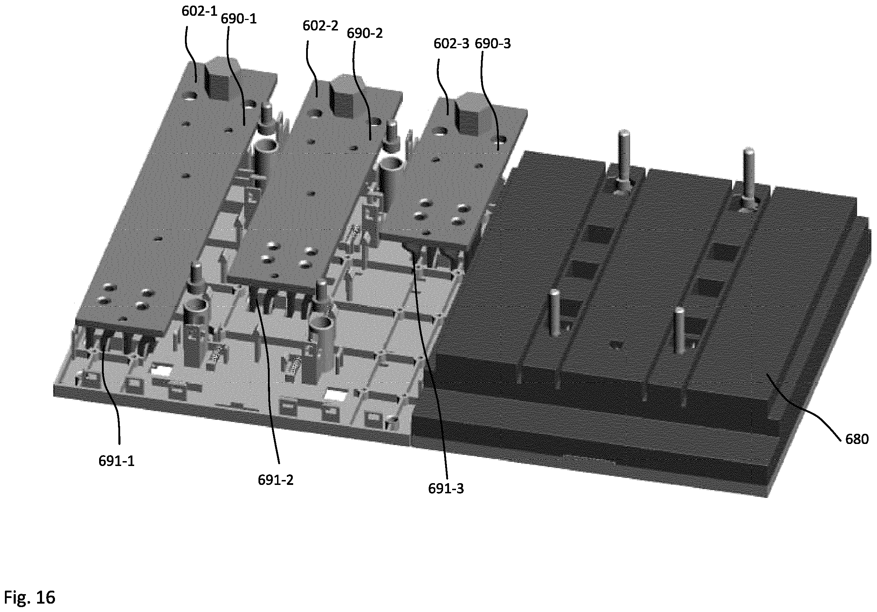

Fig. 16 shows the power feed module 680 from below, i.e. its bottom side, wherein a part of the housing of the power feed module 680 has been removed for better visibility. Each of the connection bars 690-i here has a different length, just long enough to reach inside contact terminals 691-1, 691-2, 691-3 (hereafter sometimes collectively referred to as 691-i), which electrically connect each of the connection bars 690-i of the set of connection bars with a corresponding one of the busbars of the set of busbars within the inner housing. In this way, power can be fed in at the front of the outer housing 650 at the outside contact terminals 602-i, via the connection bars 690-i, to a corresponding inner contact terminal 691-i, and from there to the busbars of the set of busbars within the inner housing, from the bottom side of the inner housing (or fed out, in reverse order).

When the outer housing 650 is configured to be connected to a power feed module 680 (or similar), it may have, by itself, a comparatively low ingress protection rating, for example IP20, because of its bottom-side interface for interfacing with the power feed module 680. Conversely, when such an outer housing 650 is then mounted onto the power feed module 680 (and interfaces with it mechanically), the ingress protection rating may increase, for example to IP 65. The interface between the power feed module 680 and the outer housing 650 may, on either side or on both sides, be provided with sealing contours and/or gaskets.

On its bottom side, the power feed module 680 may be provided with mounting holes for mounting the entire busbar system 600 to an external structure, e.g. a wall. As an example, in Fig. 16 some screws are shown partially inserted into the respective mounting holes on the right-hand side.

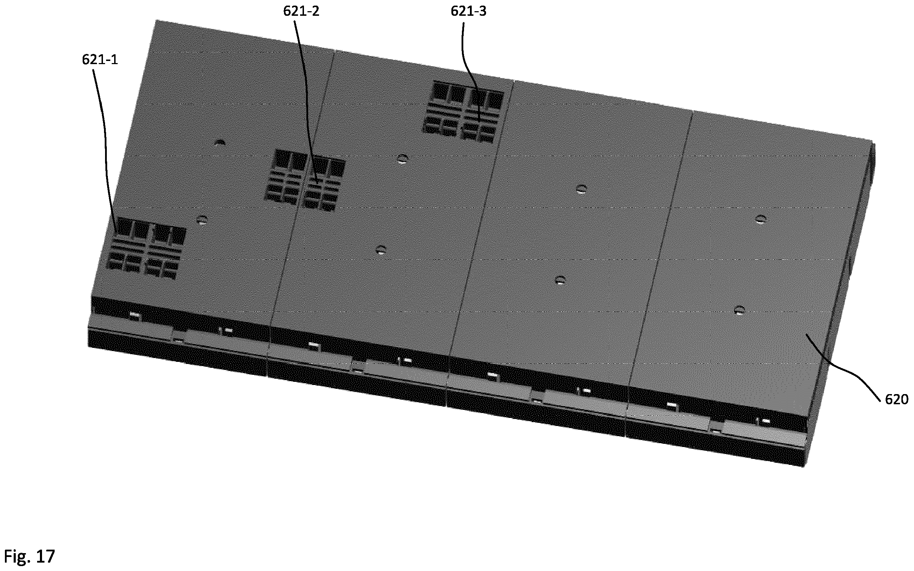

The inner housing 620 (see Fig. 17) is configured such that the inside electrical terminals 691-i are electrically connected to the busbars of the set therein, when the inner housing 620 is mounted to the power feed module 680. For example, the busbars within the inner housing 620 may be configured and/or arranged such that each inside electrical terminal 691-i directly contacts a portion of the busbar.

Fig. 15 shows how the inside contact terminals 691-i (here: four per connection bar 690-i) protrude from the main upper surface plane of the power feed module 680, although here protected by housing protrusions 692-1, 692-2, 692-3 (hereafter sometimes collectively referred to as 692-i), partially (here: on 4 sides) surrounding each of two ends of each inside contact terminal 691-i above the main upper surface plane of the power feed module 680.

The inside contact terminals 691-i in this example have two ends, because they are here formed with a two-pronged shape (or: lyre shape). The housing protrusions 692-i may have cuboid form and may be (configured to be) inserted into corresponding recesses in the bottom side of the inner housing. The power feed module 680 and/or the outer housing 650 may be provided with additional contours to aid the power feed module 680 in carrying the weight of the outer housing 650 including its contents.

Fig. 17 shows the inner housing 620 of the touch-protected busbar system 600 from below, i.e., with its bottom side up. Clearly visible are bottom-side contact openings 621-1, 621-2, 621-3 (hereafter sometimes collectively referred to as 621-i), opening onto the recesses for receiving the housing protrusions 692-i of the power feed module 680, including the top-side ends of the inside contact terminals 691-i. These bottom-side contact openings 621-i thus form a bottom-side interface of the inner housing 620, allowing power feed-in and/or power feed-out via the bottom side of the inner housing 620.

The inner housing 620 and the outer housing 650 may otherwise be configured as has been described in the foregoing with respect to any of the other variants of the inner housing and outer housing, respectively. For example, the outer housing 650 may be integrally formed or may be formed from separate wall units 551-554, like the outer housing 550. The inner housing 620 and the outer housing 650 may, at least in some areas, be sealingly connect to one another as has been described with respect to the sealing structure 570, in particular in connection with Figs. 11-13.

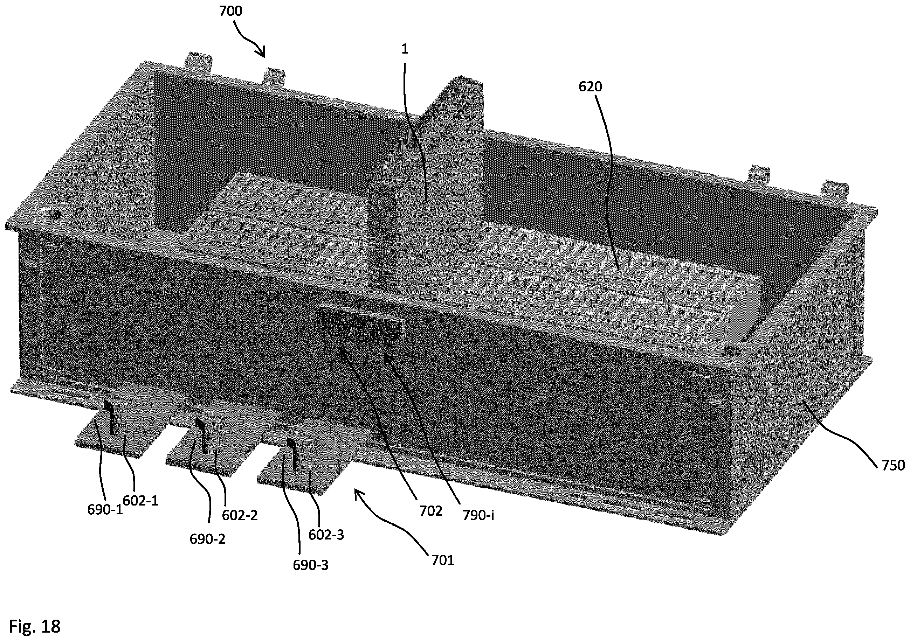

Fig. 18 shows a touch-protected busbar system 700 according to a further embodiment of the present invention. Also in this embodiment, the outer housing 750 (here shown without the top structure 156) is configured for a bottom-side power connection, i.e., bottom-side power feed-in or bottom-side power feed-out.

The busbar system 700 comprises electrical interface structures, among them a first electrical interface structure 701. Although it comprises outside contact terminals 602-i of connection bars 690-i of a set of connection bars just as the electrical interface structure 601 in the busbar system 600, the first electrical interface structure 701 of the busbar system 700 is configured differently: The first electrical interface structure 701 is not part of a separate power feed module 680, but is arranged directly at, and preferably integrated in, the outer housing 750, here in the front-side wall structure (or wall unit in case of a composite outer housing 750), and specifically closer to its bottom edge than to any other edge. The first electrical interface structure 701 may thus be especially strongly ingress-protected, for example IP 41 or more, or IP 65 or more, or NEMA 2 or more, or NEMA 3 or more.

The connection bars 690-i can be integrated into any of the wall structure 151-154 by any known conventional means, for example: the respective wall structure 151-54 may be injection-molded around the connection bars 690-i (i.e., insert molding may be performed with the connection bars 690-i as inserts); the connection bars 690-i may be pressed into the respective wall structure 151-154; the connection bars 690-i may be inserted through openings in the respective wall structure 151-154, wherein the openings are provided with sealing structures and/or gaskets; or additional parts may be provided that enclose the connection bars 690-i and which in turn are received in openings of the respective wall structure 151-154.

The inner housing 620 of the busbar system 700 may be formed identically to the inner housing 620 of the busbar system 600. Fig. 18 shows an exemplary electrical device of the first type 1 (or: first connection type), here a motor starter, mounted on the inner housing.

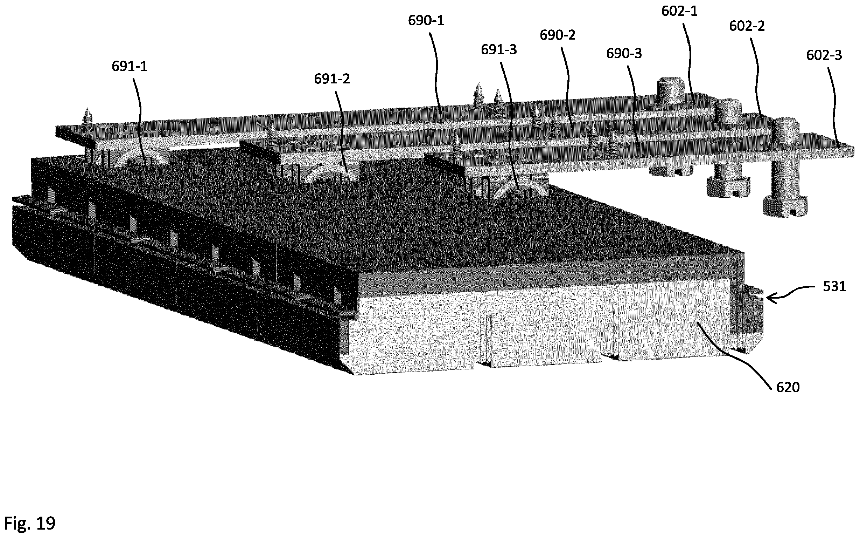

Fig. 19 shows only the inner housing 620, the inside contact terminals 691-i, the connection bar 690-i and the outside contact terminals 602-i. As is also shown in Fig. 19, here the connection bars 690-i are fixed with screws to the outer housing 650.

Returning to Fig. 18, the busbar system 700 further comprises a second electrical interface structure 702, comprising a row of outside contact terminals 790-i, each directly connected to a corresponding inside contact terminal. The row may be only a few contacts wide, as shown schematically in Fig. 18 for a better view, or may - preferably - comprise one outside contact terminal 790-i for each column of slits of the inner housing 620, or for each two (or three, or four) columns of slits of the inner housing 620. This may depend, for example, on a minimum width of electrical devices intended for the busbar system 700 in terms of columns of slits. Thus, the row of outside electrical terminal 790 may run along a majority of the length of the respective wall structure 151-154 (here: the front structure or first wall structure 151).

Also the second electrical interface structure 702 may be integrated into the outer housing 750, preferably (but not necessarily) into the same part of the outer housing 750 into which also the first electrical interface structure 701 is integrated (if it is provided). The terms "first" and "second" here serve merely to distinguish one from the other and do not imply one being more important than the other, or that the "second" may only be there if there is a "first", or the like. Again, the integration of the second electrical interface structure 702 may be done so as to guarantee an ingress protection of IP 41 or higher, or NEMA 2 or higher, specifically IP 65 or higher, or NEMA 3 or higher.

The second electrical interface structure 702 may, for example, be integrated into the wall structure by any of the methods described in the foregoing with respect to the connection busbars 690-i (insert molding, pressing, gaskets, and so on). A major advantage of the integrated second electrical interface structure 702 is that a user does not have to spend any thought on an ingress-protected electrical connection of electrical devices inside the touch-protected busbar system 700 to the outside: the user merely has to connect the electrical devices mounted to the inner housing 620 electrically to an inside contact terminal, and then connect the corresponding outside contact terminal 790-i to the outside target. Preferably, the second electrical interface structure 702 provides outlets (for power and/or signals), while the first electrical interface structure 701 may provide inlets.

It shall be understood that any of the first and/or second electrical interface structure 701, 702 may, on its outside, be provided with additional protection such as a cover, a housing and/or the like, for example as shown in Fig. 14.

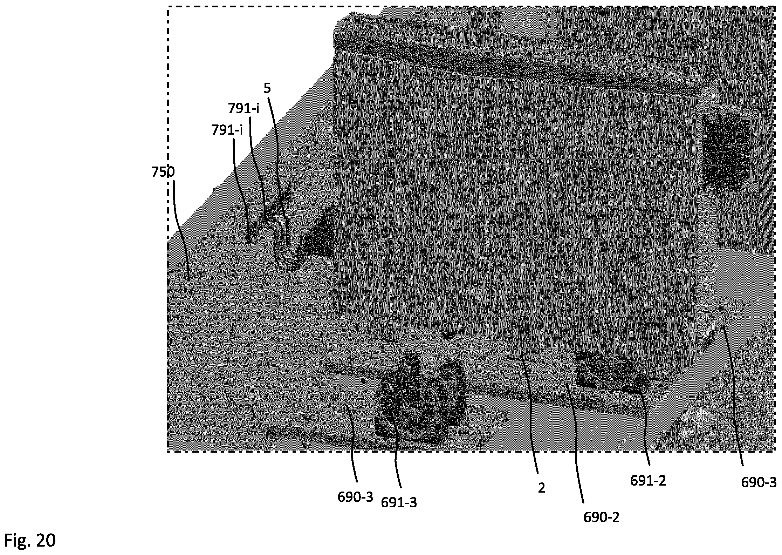

Fig. 20 shows a detailed view from the inside of the outer housing 750, with the inner housing 620 removed for a better view. On the inside of the front wall structure (e.g. formed by a first wall unit 151, or monolithically formed), inside contact terminals 791-i of the second electrical interface structure 702 are shown, each electrically connected to one and only one outside contact terminal 790-i of the second electrical interface structure 702. In the shown example, three poles of the electrical device 1 are connected to three inside contact terminal 791-i, respectively, here by internal wires 5. As has been described in the foregoing, the number of outside contact terminals 790-i may be larger than exemplarily shown in the drawings, and accordingly also the number of inside contact terminal 791-i may be larger than shown. Specifically, the length of the row of inside contact terminal 791-i may extend along the majority of the length of the respective wall structure into which the second electrical interface structure 702 is set, allowing easy electrical connections to electrical devices arranged on any area of the inner housing 750.

In the lower part of Fig. 20, due to the removal of the inner housing 620, the connection bars 690-i are visible, as are the inside contact terminal 691-i connected to the first electrical interface structure 701. Fig. 20 thus also illustrates how a portion of a busbar of the set of busbars may be arranged in between the two prongs of each inside contact terminal 691-i for an electrical connection.

On the bottom side of the electrical device 1 of the first type, mechanical connectors 2 are shown, which are arranged to both sides of a corresponding electrical contact of the electrical device.

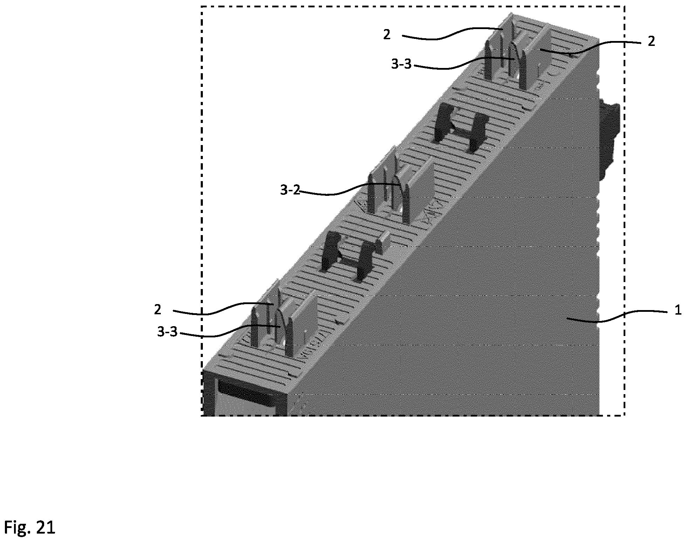

Fig. 21 shows the bottom side of the electrical device 1. The electrical device 1, being of the first connection type, has protruding electrical contacts 3-1, 3-2, 3-3 (hereafter sometimes collectively referred to as 3-i), one for each of the busbars of the set inside the inner housing 620 of the busbar system 700 (although some devices may have more or less protruding electrical contacts 3-i, in order to contact more busbars or less busbars).

The protruding electrical contacts 3-i are configured to be inserted into the access openings 225-i in the inner housing 620, and then into contact openings 214 in a slitted or hybrid busbar 210-i of the set of busbars, in order to provide an electrical connection. On both sides of each protruding electrical contact 3-i, a mechanical connector 2 is arranged, which is configured to pass through another access opening 225-i and another contact openings 214 in the slitted or hybrid busbar 210-i, e.g. access openings 225-i/ contact openings 214 immediately adjacent on both sides of the access opening 225-i/contact opening 214 into which the protruding electrical contact 3-i is inserted. The mechanical connectors 2 thus provide some protection for the protruding electrical contact 3-i, as well as improve the mechanical connection between the electrical device 1 and the inner housing 620.

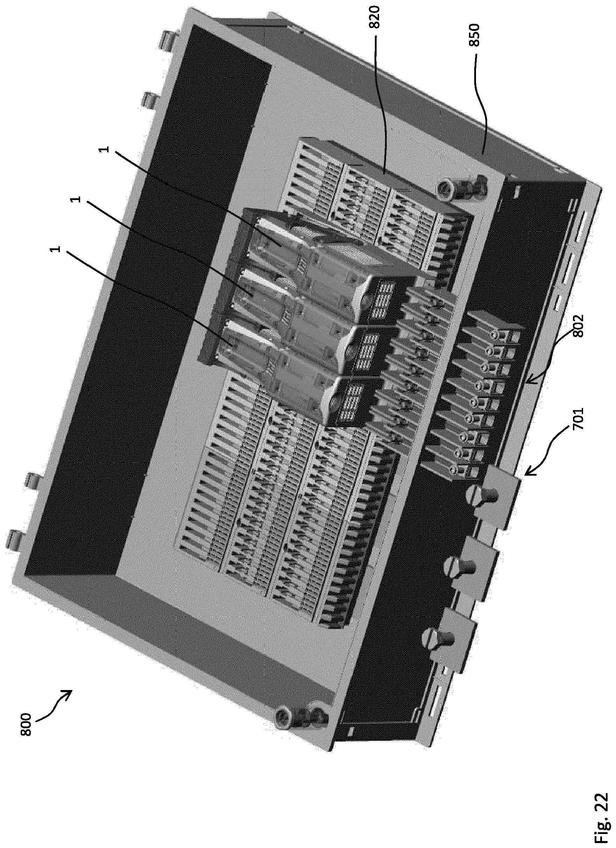

Fig. 22 shows a touch-protected busbar system 800 according to a further embodiment of the present invention. Also in this embodiment, the outer housing 850 (here shown without the top structure 156) is configured for a bottom-side power connection, i.e., bottom-side power feed-in or bottom-side power feed-out. The outer housing 850 can be seen as a variant of the outer housing 750 of the touch-protected busbar system 700, different from it by the form of the second electrical interface structure 802 (instead of the second electrical interface structure 702 shown in Fig. 18 and Fig. 20). In Fig. 22 the second electrical interface structure 802 is shown as open on its top (just as the top structure 156 of the outer housing 850 is not shown). However, it shall be understood that in general the second electrical interface structure 802 will be covered, especially to obtain a high ingress protection rating, e.g. of IP65 or higher. For example, a transparent plastic cover may cover the second electrical interface structure 802, or any other suitable covering structure.

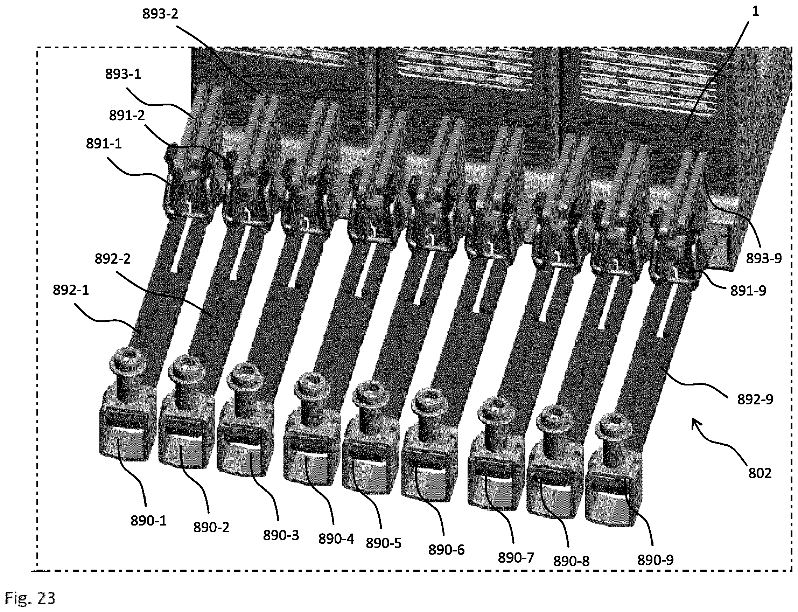

Fig. 23 shows the second electrical interface structure 802 in more detail, wherein the outer housing 850 has been removed for better visibility. The second electrical interface structure 820 comprises a plurality of outside contact terminals 890-1, 890-2,...890-9 (hereafter sometimes collectively referred to as 890-i). The number of nine outside contact terminals 890-i results from the fact that here, exemplarily, three electrical devices 1 are shown, each being a three-pole device. Accordingly, it shall be understood that in general the second electrical interface structure 802 can comprise any number of outside contact terminals 890-i, for example, one for every column of slits in the (front of the) inner housing 820, one for every two columns, one for every three columns, or the like.

In the variant shown in Fig. 23, the outside contact terminals 890-i are formed as screw terminals, but any other type of terminal may be provided as well. The screw terminals are configured to press, using a respective screw, a respective connecting bar 892-1, 892-2, ...892-9 (hereafter sometimes collectively referred to as 892-i) onto an external power-carrying element, e.g., a power line wire or the like, preferably a power line wire carrying power from the busbar system 800 to an external device (e.g., a motor).

On the inside of the outer housing 850, the connecting bars 892-i fork out into two-pronged inside contact terminal 891-1, 891-2, ...891-9 (hereafter sometimes collectively referred to as 891-i). The tips of the inside contact terminal 891-i are arranged in perpendicular to the main body of the connecting bars 892-i, and may be designated as "lyre-shaped" contacts due to their shortest distance being around the middle of the perpendicular section, while the tips are wider apart than that. As shown in Fig. 23 as well, the two prongs (i.e., the tips) of each inside contact terminal 891-i may be pressed towards one another by a respective spring member or biasing member, here for example a bracket-type spring.

The electrical connection between the inside contact terminals 891-i and the electrical device 1 is then made by rigid connector elements 893-1, 893-2,..., 893-9 (hereafter sometimes collectively referred to as 893-i), which are configured to be plugged in on one side into the respective electrical device 1, and on the other side in between the two prongs of one of the inside contact terminals 891-i, as shown in Fig. 23. For example, the rigid connector elements 893-i may be provided with a plug portion (e.g., a sheet portion or strip portion), or a plurality of plug portions (two sheet portions in the variant of Fig. 23) configured to be plugged in between the two (or more) prongs of the respective inside contact terminal 891-i.

In this way, a user is not forced to manipulate wires, clamps and the like on a small scale, but simply plugs in an electrical device 1 into the inner housing 820 (i.e., mounts the electrical device 1 to the front side of the inner housing 820), and then inserts one or more rigid connector elements 893-i to connect the electrical device 1 to one or more inside contact terminals 891-i.

The rigid connector elements 893-i may be configured such that they connect exactly one pole of an electrical device 1 to exactly on inside contact terminal 891-i. It is, however, also possible that a rigid connector element is formed such that it connects three poles of an electrical device 1 - separately and insulated from one another - to three inside contact terminals 891-i (in particular adjacent ones). Of course, the rigid connector element may be formed for any other number of pole/inside contact terminal connections as well (e.g., two, four,...) .

The electrical connection between the inside contact terminals 891-i and the electrical device 1 may alternatively also be realized the other way around, with two-pronged electric contacts arranged on the rigid connector elements, and corresponding plug portions being arranged as (or as part of) inside contact terminals.

Thus, an interface between a rigid connector element (or even an electrical devices 1 itself) and an inside contact terminal may be realized by a combination of a multiply-pronged terminal on one side and at least one plug portion (e.g., sheet portion, strip portion, or the like) on the other side, the at least one plug portion being configured to be plugged in between the multiply-pronged terminal for providing an electrical connection. Moreover, also a mechanical connection is provided in this manner, in particular when a spring member (or: biasing member) is provided for biasing the prongs of the multiply-pronged terminal towards one another so as to grip the plug portion when it is plugged in therebetween. The direction or distribution of such a kind of interface, e.g., on which side the multiply-pronged terminal and on which side the plug portion is arranged, may be different even within one and the same touch-protected busbar system 800.

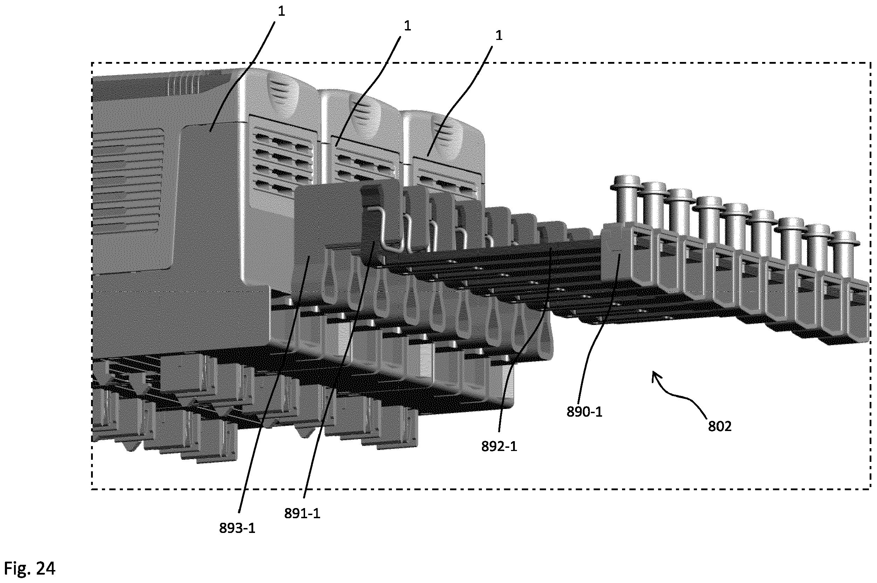

Fig. 24 shows the assembly of electrical devices 1, rigid connector elements 893-i, inside contact terminal 891-i, connecting bars 892-i, and outside contact terminal 890-i, from another angle, illustrating in particular a possible shape of the rigid connector elements 893-i.

In some alternatives, electrical connections between the electrical devices 1 and the inside contact terminal 891-i may also be effected by plugging in the electrical device 1 themselves directly in. In this variant, the touch-protected busbar system 800 may comprise a number of electrical devices 1 that are formed with device contact terminals such that they may be directly plugged into one or more inside contact terminals 891-i when the electrical device 1 is mounted on the inside housing 820, or which are plugged concurrently into one or more inside contact terminal 891-i when the electrical device 1 is being mounted on the inside housing 820.

### List of reference signs

- 1: electrical device
- 2: mechanical connector
- 3-i: protruding electrical contact
- 5: internal wire
- 100: touch-protected busbar system
- 110-i: massive busbar
- 120: inner housing
- 121-i: touch-protection cover element
- 122-i: busbar support element
- 123-i: row of latch openings
- 124: latch openings
- 125: busbar support member of a busbar support element
- 126: slitted plateau portion
- 127: holding structure
- 150: outer housing
- 151: wall structure
- 152: wall structure
- 153: wall structure
- 154: wall structure
- 155: bottom structure
- 156: top structure/cover/lid
- 161: hinge
- 162: mounting flange
- 163: mounting hole
- 210-i: hybrid busbar
- 211: massive portion
- 212: slitted portion
- 220: inner housing
- 214: contact openings
- 221-i: touch-protection cover elements
- 225-i: access openings
- 228: side wall of a busbar support element
- 229: intermediate structure
- 320: inner housing
- 321-i: touch-protection cover elements
- 322-i: busbar support element
- 331-i: mounting recesses
- 350: outer housing
- 361-i: mounting latches
- 364: fastener
- 365: guiding structure
- 410-4: hybrid busbar
- 410-5: busbar
- 410-6: busbar
- 420: inner housing
- 421-i: touch-protection cover element
- 422-i: busbar support element
- 424: latch openings
- 425-4: access openings
- 425-5: access openings
- 426-i: fastener openings
- 428: supplemental housing
- 429: supplemental housing
- 431-i: mounting latch
- 432-i: protrusion
- 500: touch-protected busbar system
- 520: inner housing
- 531: sealing groove
- 532: inner latching projection
- 533: latching hook
- 534: overhanging ledge
- 550: outer housing
- 551: first wall unit
- 552: second wall unit
- 553: third wall unit
- 554: fourth wall unit
- 557: planar protrusion
- 561-i: side flanges
- 563: protrusion
- 564: side flange
- 570: sealing structure
- 571: sealing projection
- 572: outer latching projection
- 573: latching hook
- 600: touch-protected busbar system
- 601: electrical interface structure
- 602-i: outside contact terminal
- 620: inner housing
- 621-i: bottom-side contact openings
- 650: outer housing
- 680: power feed module
- 681: power feed part of the power feed module
- 682: mechanical part of the power feed module
- 690-i: connection bar
- 691-i: inside contact terminal
- 692-i: housing protrusion
- 700: touch-protected busbar system
- 701: first electrical interface structure
- 702: second electrical interface structure
- 750: outer housing
- 790-i: outside contact terminal
- 791-i: inside contact terminal
- 800: touch-protected busbar system
- 802: second electrical interface structure
- 820: inner housing
- 850: outer housing
- 890-i: outside contact terminal
- 891-i: inside contact terminal
- 892-i: connecting bar
- 893-i: connector element

## Claims

1. A touch-protected busbar system (100; 500, 600; 700), comprising:
a set of busbars (110-i; 210-i) formed of massive busbars (110-i) or hybrid busbars (210-i);
an inner housing (120; 220; 320; 420; 520; 620; 820) enclosing the set of busbars (110-i; 210-i) and having touch-protected openings (124; 225-i) of at least one type, the touch-protected openings (124; 225-i) allowing electrical and/or mechanical contacts (2, 3-i) of electrical devices (1) to pass through to contact the busbars (110-i; 210-i) of the set of busbars and to be mounted thereon; and
an outer housing (150; 350; 550; 650; 750; 850), comprising at least wall structures (151-154) and a top structure (156) forming a removable and/or openable lid, the outer housing (150; 350; 550; 650; 750; 850) enclosing the inner housing (120; 220; 320; 420; 520; 620; 820);
wherein the inner housing (120; 220; 320; 420; 520; 620; 820) is mountable or mounted to the outer housing (150; 350; 550; 650; 750; 850) or is partially integrated into the outer housing (150; 350; 550; 650; 750; 850).

2. The busbar system (100; 500; 600; 700) of claim 1,
wherein the outer housing (150; 350; 550; 650; 750) is ingress-protected according to an ingress protection, IP, code of at least IP41, or according to a National Electrical Manufacturers Association, NEMA, rating of at least 2, and preferably has a higher degree of ingress protection than the inner housing (120; 220; 320; 420; 520; 620) .

3. The busbar system (500) of claim 1 or claim 2,
wherein the wall structures (551-554) are formed as at least two separate wall units, which are mountable to one another to form at least the wall structures (551-554).

4. The busbar system (500) of claim 3,
the outer housing (150) further comprising a bottom structure (155),
wherein also the bottom structure (155) and the top structure (156) are formed separately, and are mountable to at least one of the at least two separate wall units, respectively.

5. The busbar system (500) of claim 3 or claim 4,
wherein the inner housing (520; 620) has at least one sealing groove (531) extending in parallel with a first wall unit of the wall units; and said first wall unit has a sealing projection (570) configured to be inserted into the sealing groove (531).

6. The busbar system (500) of claim 5,
wherein the first wall unit has an outer latching projection (572) and the inner housing (520) has an inner latching projection (532) adjacent to, and partially forming, the sealing groove (531);
wherein the inner latching projection (532) and the outer latching projection (572) are configured to latchingly engage one another for sealing an interface between the inner housing (520) and the outer housing (550).

7. The busbar system (500) of claim 6,
wherein the inner latching projection (532) is sandwiched, or configured to be sandwiched, between the sealing projection (571) and the outer latching projection (572) of the first wall unit (551, 553).

8. The busbar system (100; 500; 600; 700; 800) of any of claims 1 to 7,
wherein the inner housing (320; 420; 520; 620; 820) is releasably or non-releasably mounted to the outer housing (350; 550; 650; 750; 850).

9. The busbar system (100) of any of claims 1 to 7,
wherein a portion (122-i; 222-i), preferably a bottom portion, of the inner housing (120; 220) is integrated into a structure, preferably a bottom structure (155), of the outer housing (150).

10. The busbar system (600) of any of claims 1 to 9,
wherein the inner housing (620) has a bottom-side interface (621-i), and the busbar system (600) comprises a power feed-in module (680), configured to feed power, and/or receive power, via the bottom-side interface (621-i) of the inner housing (620).

11. The busbar system (600; 700; 800) of any of claims 1 to 10,
wherein the outer housing (650; 750; 850) comprises at least one integrated electrical interface structure (601; 701, 702; 802) with outside contact terminals (602-i; 790-i; 890-i) on the outside of the outer housing (650; 750; 850) and inside contact terminals (691-i; 791-i; 891-i) on the inside of the outer housing (650; 750; 850);
the outside contact terminals (602-i; 790-i; 890-i) being configured to receive external power-carrying elements from the outside of the outer housing (650; 750; 850); and the inside contact terminals (691-i; 791-i; 891-i) being electrically connected to corresponding ones of the outside contact terminals (602-i; 790-i; 890-i) and configured to receive internal power-carrying elements (5; 110-i; 210-i; 893-i) at the inside of the outer housing (650; 750; 850).

12. The busbar system (600; 700; 800) of claim 11,
wherein, in at least one of the at least one integrated electrical interface structure (601; 701), the outside contact terminals (602-i) and the inside contact terminals (691-i) are electrically connected via a set of connection bars (690-i) comprising at least one connection bar (690-i), each connection bar (690-i) of the set of connection bars (690-i) being arranged in perpendicular to each busbar (110-i; 210-i) of the set of busbars (110-i; 210-i) .

13. The busbar system (700; 800) of claim 11 or claim 12,
wherein at least one of the at least one integrated electrical interface structure (702; 802) is arranged in one of the wall structures of the outer housing (750; 850), wherein the outside contact terminals (790-i; 890-i) open to the outside of said wall structure, and the inside contact terminals (791-i; 891-i) open to the insides of said wall structure, wherein preferably each outside contact terminal (790-i; 890-i) is electrically connected to exactly one inside contact terminal (791-i).

14. The busbar system (800) of claim 13, wherein each inside contact terminal (891-i) is provided with a movable rigid connector element (893-i) for connecting said inside contact terminal (891-i) electrically with an electrical device (1) mounted, through the inner housing (820), on the set of busbars.

15. The busbar system (700; 800) of any of claims 10 to 13, further comprising at least one electrical device (1) mounted on at least one busbar (110-i; 210-i) of the set of busbars (110-i; 210-i), wherein the at least one electrical device (1) is also plugged directly into at least one of the inside contact terminals (791-i; 891-i).
